(19)

Europäisches
Patentamt
European
Patent Office
Office européen
des brevets

(11) **EP 1 688 774 B1**

(12) **EUROPEAN PATENT SPECIFICATION**

(45) Date of publication and mention
of the grant of the patent:
**20.02.2013 Bulletin 2013/08**

(51) Int Cl.:
***G02B 21/00*** (2006.01)  ***G02B 21/02*** (2006.01)
***G02B 21/16*** (2006.01)

(21) Application number: **04819349.4**

(86) International application number:
**PCT/JP2004/017374**

(22) Date of filing: **24.11.2004**

(87) International publication number:
**WO 2005/052668 (09.06.2005 Gazette 2005/23)**

(54) **LASER SCANNING TYPE FLUORESCENT MICROSCOPE**

FLUORESZENZMIKROSKOP DES LASER-SCANNING-TYPS

MICROSCOPE FLUORESCENT A BALAYAGE LASER

(84) Designated Contracting States:
**DE FR GB**

(30) Priority: **26.11.2003 JP 2003395391**

(43) Date of publication of application:
**09.08.2006 Bulletin 2006/32**

(73) Proprietor: **Olympus Corporation
Tokyo 151-0072 (JP)**

(72) Inventor: **KAWASAKI, Kenzi,
Olympus Corporation
Hachioji-shi,
Tokyo 192-8512 (JP)**

(74) Representative: **von Hellfeld, Axel et al
Wuesthoff & Wuesthoff
Patent- und Rechtsanwälte
Schweigerstrasse 2
81541 München (DE)**

(56) References cited:
**EP-A- 0 363 931       JP-A- 2001 059 939
JP-A- 2002 221 663    JP-A- 2003 029 153
US-A- 5 386 112        US-A- 5 608 564
US-A- 6 134 002        US-A1- 2003 179 370
US-B1- 6 429 968**

**Description**

TECHNICAL FIELD

The present invention relates to a laser scan type fluorescence microscope used for a fluorescence observation or a confocal fluorescence observation in application of an elucidation of the function or an imaging of a cell and the like.

BACKGROUND ART

Conventionally, in this kind of laser scan type fluorescence microscope, a picture has been obtained by detecting light emanated from a sample wherein laser light condensed at a minute spot domain of the sample is scanned by scanning means, such as Galvano mirror, in addition to general observation of a microscope.

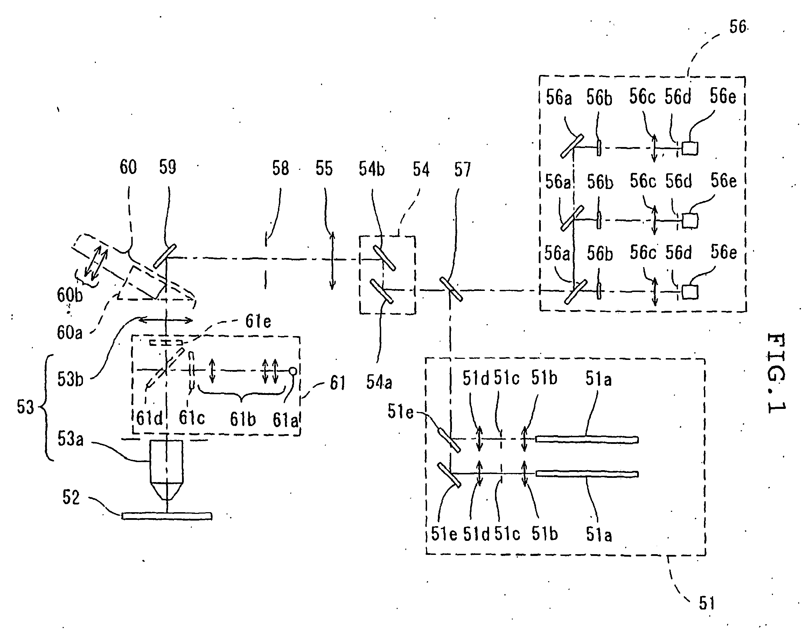

Fig. 1 is an outline block diagram showing one conventional example of a laser scan type confocal fluorescence microscope.

The laser scan type confocal fluorescence microscope of Fig. 1 comprises a laser light source section 51, an objective lens optical system 53 which condenses excitation light from a laser light source section 51 on a sample 52, a scanning means 54 which makes the excitation light from the laser light source section 51 scan on a surface of the sample 52, a pupil projection lens 55 arranged between the scanning means 54 and the objective lens optical system 53, a detection optical system 56 for detecting fluorescence which is emanated from the sample 52 and has penetrated the objective lens optical system 53 and the pupil projection lens 55.

The laser light source section 51 has a laser light source 51a and a collimating optical system which consists of lenses 51b and 51d and a pinhole 51c, and a dichroic mirror 51e.

The objective lens optical system 53 has an image forming lens 53b for forming an intermediate image of an objective lens 53a and the sample 52. Moreover, a backside focal position of the objective lens 53a is constituted so that it may become conjugate at a position near the scanning means 54 by the image forming lens 53b and the pupil projection lens 55.

The scanning means 54 consists of a proxy type Galvano mirror having Galvano mirrors 54a and 54b.

The detection optical system 56 has a dichroic mirror 56a, a barrier filter 56b, a lens 56c, and a confocal pinhole 56d and a light receiving optical sensor 56e, such as a photomultiplier and the like.

Furthermore, the microscope of Fig. 1 has a dichroic mirror 57 which leads the fluorescence from the sample 52 to the detection means 56 while leading excitation light from the light source section 51 to the sample 52, a mirror 59 which deflects the light which transmitted through the pupil projection lens 55 to the image forming lens 53b, an eye piece optical system 60 for observing the image of the sample 52, and a fluorescence lighting optical system 61 used at the time of a normal fluorescence observation.

Thus, in the laser scan type confocal fluorescence microscope as constituted in Fig. 1, the excitation light emanated from the laser light source 51a is condensed at the pinhole 51c by the lens 51b, and then converted into parallel light by the lens 51d. Then, this excitation light is led to the proxy type Galvano mirror section that is the scanning means 54 through dichroic mirrors 51e and 57,and the luminous flux of it is shifted to direction of two dimensions by each rotation of Galvano mirrors 54a and 54b to an optical axis, and it is condensed to the intermediate image position 58 through the pupil projection lens 55, and thus an primary image is formed. The excitation light condensed to the intermediate image position 58 is irradiated to the sample 52 in a minute spot like shape through the mirror 59, the image forming lens 53b, and the objective lens 53a. At this time, the excitation light irradiated by the surface 52 of the sample is scanned by the scanning means 54.

The backside focal position of the objective lens 53a is projected by the image forming lens 53b and the pupil projection lens 55 near the proxy type Galvano mirror which is the scanning means 54.

Fluorescence excited on the sample 52 by irradiating the excitation light, is led to the detection optical system 56 through the objective lens 53a, the image forming lens 53b, the pupil projection lens 55, the scanning means 54, and the dichroic mirror 57. Then, a wavelength separation is carried out by the dichroic mirror 56a, and only the fluorescence which transmitted the confocal pinhole through the barrier filter 56b and the lens 56c is detected by the light receiving optical sensor 56e, such as a photomultiplier.

In carrying out a normal fluorescence observation through the eye eyepiece optical system 60, a fluorescence lighting optical system 61 equipped with a different light source 61a from the laser light source 51a is used. Excitation light emanated from the light source 61a is transmitted through a lens 61b and a filter 61c, and is reflected by the dichroic-mirror 61d, and illuminates the sample 52 through the objective-lens 53a. Fluorescence excited on the sample 52 by irradiating the excitation light is condensed by the objective-lens 53a, and wavelength separation is carried out by the dichroic-mirror 61d arranged at the fluorescence lighting optical system 61, and it is observed through the prism 60a of the eyepiece optical system 60, and the eyepiece 60b through the barrier filter 61e.

US 6,429,968 B1 relates to an apparatus for photoluminescence microscopy and spectroscopy. It has been discovered therein that an optical analysis that is uniquely based on geometrical rather than diffraction considerations, for the purposes of controlling the size of the region from which the photoluminescence is collected, provides an optical system capable of performing photoluminescence microscopy and/or spectroscopy without certain disadvantages. It is based, in part, on the use of an optical fiber(s) as a field stop within the detection arm(s) of the optical system for coupling the photoluminescence into an optical spectrum analyzer (OSA) and/or photodetector, wherein the diameter and the numerical aperture of the optical fiber are judiciously chosen to limit the field of view, or the region from which the photoluminescence is collected.

From US 5,608,564 a high resolution scanning objective designed for performing high resolution and high speed three-dimensional scanning of large object surfaces is known. The scanning objective comprises three successively arranged lens groups, wherein a first and second lens group are designed and arranged such that an exit pupil formed by both lens groups coincides with an entrance pupil of the first lens group. The first and second lens group are designed to reduce the scan angle and to simultaneously enlarge the pupil, whereas the third lens group is characterized by a high numerical aperture in order to promote the resolution of the scanning objective.

## DISCLOSURE OF THE INVENTION

Such a conventional laser-scan-type confocal fluorescence microscope is excellent in resolution, and it has an advantage that light from other than a minute spot to be observed can be eliminated. Thus, it is useful for carrying out an intracellular functional elucidation etc.

However, in the laser scan type confocal point fluorescence microscope, the equipment itself becomes large since it is necessary to add an optical system such as a pupil projection lens 55 and a scanning-means 54 mentioned above etc., in addition to an optical system used for a normal fluorescence observation, such as an objective lens 53a and an image forming lens 53b,

That is, generally as for the optical system of a laser-scan type confocal fluorescence microscope, the focal length of an image forming lens has become long such as around 180mm. For this reason, a total length from a sample to the scanning means arranged near a conjugate position of a pupil of an objective lens becomes 400-500mm, and the whole equipment becomes enlarged.

For this reason, a confocal fluorescence observation and a fluorescence observation become possible only in case that the sample is arranged on a stage of a microscope.

Moreover, when a confocal fluorescence observation is actually performed to a rat, a small animal or a cell under a cultivation environment where it is alive (in vivo), there is a restriction that the observation environment must be built on the stage. Furthermore, a laser scan type confocal fluorescence microscope is generally constituted so that it may observe in a state where the optical axis of an objective lens becomes perpendicular to a surface of the stage. Therefore, it is difficult to observe the sample from a slant direction. Moreover, it is difficult to observe by leaning the whole laser scan type confocal fluorescence microscope to the sample, or to observe by leaning the sample and the stage.

The present invention is made in view of problems mentioned above, and it aims at providing a laser scan type fluorescence microscope, which can be miniaturized compared with the conventional laser scan type confocal fluorescence microscope, and can observe a state that a cell is alive (in vivo) by wavelength from a visible region to a near-infrared region with sufficient user-friendly operation.

The present invention is defined by the appended claims. In order to attain the above-mentioned purpose, the laser scan type fluorescence microscope according to the present invention comprises a laser light source section, an objective lens optical system which condenses excitation light from the laser light source section on a sample, a scanning means which makes the excitation light from the laser light source section scan on a surface of the sample, a pupil projection lens arranged between the scanning means 54 and the objective lens optical system, a detection optical system for detecting fluorescence which is emanated from the sample and has penetrated the objective lens optical system and the pupil projection lens. The objective lens optical system has an objective lens, an image forming lens for forming an intermediate image of the sample, and a backside focal position of the objective lens constituted so that it may become conjugate at a position near the scanning means by the image forming lens and the pupil projection lens, and the following condition (1) is satisfied;

$$0.15 \leqq D \diagup L \leqq 0.5 \qquad \cdots (1)$$

where D is a confocal distance of the objective lens, and L is a distance from the sample surface to the conjugate position of the backside focal position of the objective lens arranged near the scanning means.

The laser scan type fluorescence microscope according to the present invention is characterized in that it comprises an optical transmission means which leads the excitation light from the laser light source section to the scanning means.

In the laser scan type fluorescence microscope according to the present invention, the pupil projection lens consists of two or more lens groups, wherein a concave surface of a lens arranged at the nearest side of the scanning means is directed toward the scanning-means side, and a concave surface of a lens arranged at an intermediate image side is directed toward the intermediate image side, and the following condition (2) is satisfied;

$$0.2 \leq Fe / D3 \leq 0.5 \qquad \cdots (2)$$

where D3 is a distance from the conjugate position of the pupil of the objective lens located near the scanning means to the intermediate image position of the image forming lens, and Fe is a focal length of the pupil projection lens.

The laser scan type fluorescence microscope according to the present invention comprises two or more lens groups, having at least one cemented lens having a positive lens and a negative lens, and the following conditions (3) and (4) are satisfied;

$$0.4 \leq FTL / D1 \leq 1 \qquad \cdots (3)$$

$$80 \leq \nu p \qquad \cdots (4)$$

where $\nu p$ is Abbe's number of the positive lens in the cemented lens, FTL is a focal length of the image forming lens, and D 1 is a distance from a shoulder of the objective lens on a body to the intermediate image position.

The laser scan type fluorescence microscope according to the present invention is characterized in that the image forming lens consists of two lens groups having a front group at the side of an intermediate image and a rear group at the side of an objective lens, and the lens group of the front group of the image forming lens has at least one negative lens, and the following conditions (5) and (6) are satisfied;

$$0.4 \leq D2 / FTL \leq 1 \qquad \cdots (5)$$

$$0.7 \leq FTL1 / FTL \leq 1.5 \qquad \cdots (6)$$

where FTL1 is a focal length of the rear group of the image forming lens, and D2 is an interval between the front group of the image forming lens and the rear group of the image forming lens.

The laser scan type fluorescence microscope according to the present invention comprises a first multi-mode fiber which leads the excitation light from the laser light source section to the scanning means, a second multi-mode fiber which leads fluorescence from the sample to the detection optical system, a first lens by which entry of the excitation light to the first multi-mode fiber is carried out, and a second multi-mode fiber which leads fluorescence from the sample to the detection optical system, and the following conditions (7) to (9) are satisfied;

$$2 \leq \Phi em / \Phi ex \leq 12 \qquad \cdots (7)$$

$$0.61 \times (\lambda ex / Naex) < \Phi ex \qquad \cdots (8)$$

$$0.61 \times (\lambda em / NAem) < \Phi em \qquad \cdots (9)$$

where $\Phi ex$ is a diameter of a core of the first multi-mode fiber, $\Phi em$ is a diameter of a core of the second multi-mode fiber, NAex is an aperture number by which entry to the first multi-mode fiber by the first lens is carried out, $\lambda ex$ is the excitation wavelength, NAem is an aperture number by which entry to the second multi-mode fiber by the second lens is carried out, and $\lambda em$ is the fluorescence wavelength.

The laser scan type fluorescence microscope according to the present invention is characterized in that it comprises an optical transmission means which leads fluorescence from the sample to the detection optical system.

According to the laser scan type microscope of the present invention, by satisfying condition (1), a distance from a scanning means to the sample surface can be shortened, and the equipment can be miniaturized.

By arranging the optical transmission means between the laser optical system and the scanning means, a degree of freedom can be given to arrangement of the optical system of main body that is from the scanning means to the objective lens, and of the laser optical system, and a miniaturized optical system of main body suitable for observation in a state where the sample is alive (in vivo) can be provided.

By arranging such that the pupil projection lens which relays parallel luminous flux deflected by the scanning means to an intermediate image position has two or more lens groups, a concave surface of a lens arranged at the nearest side of the scanning means is directed toward the scanning means side, and a concave surface of a lens arranged at the nearest side of the intermediate image side is directed toward the middle-image side, correction of an optical performance in the intermediate image can be carried out well.

By satisfying the condition (2), shortening of a distance from the scanning means to the intermediate image position, and miniaturization of the equipment can be achieved, while making an optical performance of the pupil projection lens good.

By satisfying the condition (3), shortening of a distance from a shoulder of the object lens on a body to the intermediate image position, and miniaturization of the equipment can be achieved.

By satisfying the condition (4), correction of spherical aberration generated by shortening a focal length, and chromatic aberration on the axis can be carried out well.

By constituting that an image forming lens consists of two lens groups, correction of aberration in a front group can be carried out by a rear group so that the aberration in the front group may be offset, and a suitable laser beam microscope is obtained by observation at a state in vivo.

By satisfying the conditions (5) and (6), correction of astigmatic, coma aberration and magnification chromatic aberration can be carried out well.

In a constitution comprising a first multi-mode fiber which leads the excitation light from the laser light source section to the scanning means, and a second multi-mode fiber which leads fluorescence from the sample to the detection optical system, by satisfying the conditions (7) to (9), the rate of the amount of fluorescence detected to the excitation light from the light source becomes high, and brighter fluorescence can be detected, and furthermore, picture information of a thickness direction from the sample can be obtained covering a predetermined thickness. Accordingly, operation performance in observation in the state that the sample is alive (in vivo) is improved.

By arranging the optical transmission means between the pupil projecting lens and the detection optical system, a degree of freedom can be given to arrangement of the optical system of the main body that is from the pupil projecting lens to the objective lens, and of the detection optical system, and a miniaturized optical system of the main body suitable for observation in a state (in vivo) of the sample can be constituted.

Further, if the optical transmission means which leads the excitation light from the laser light source section to the scanning means, and the optical transmission means which leads the fluorescence from the sample to the detection optical system are arranged by separate optical fibers, respectively the detection optical system can avoid an influence of the self-generated fluorescence generated when the excitation light enters into the optical fiber, and the fluorescence generated by the sample can be detected with high precision.

BRIEF EXPLANATION OF DRAWINGS

Figure 1 is an outline block diagram showing one conventional example of a laser scan type confocal fluorescence microscope.

Figure 2 is an outline block diagram of a first embodiment of a laser scan type fluorescence microscope according to the present invention.

Figure 3 is a diagram for explaining a principal part showing an outline optical system arranged at the main body portion in the microscope of Fig. 2.

Figure 4 is a diagram showing an optical arrangement, in which a laser light source section and a detection optical system are added to the optical system of a main body portion of the microscope shown in Fig. 3.

Figure 5 is a diagram showing an outline optical arrangement in a second embodiment of the laser scan type fluorescence microscope according to the present invention.

Figure 6 is a diagram showing an outline optical arrangement in a third embodiment of the laser scan type fluorescence microscope according to the present invention.

Figure 7 is a diagram showing an outline optical arrangement in a fourth embodiment of the laser scan type fluorescence microscope according to the present invention.

Fig. 8 is a sectional diagram showing an optical arrangement developed along an optical axis of a pupil projection optical system and an objective optical system and a concerning the first embodiment of the present invention.

Fig.9 is a sectional diagram showing an optical arrangement developed along an optical axis of a pupil projection optical system and an object optical system of the third embodiment according to the present invention.

Fig. 10 is a sectional diagram showing an optical arrangement developed along an optical axis of an pupil projection optical system and an object optical system of the third embodiment according to the present invention,

## BEST MODE FOR CARRYING OUT THE INVENTION

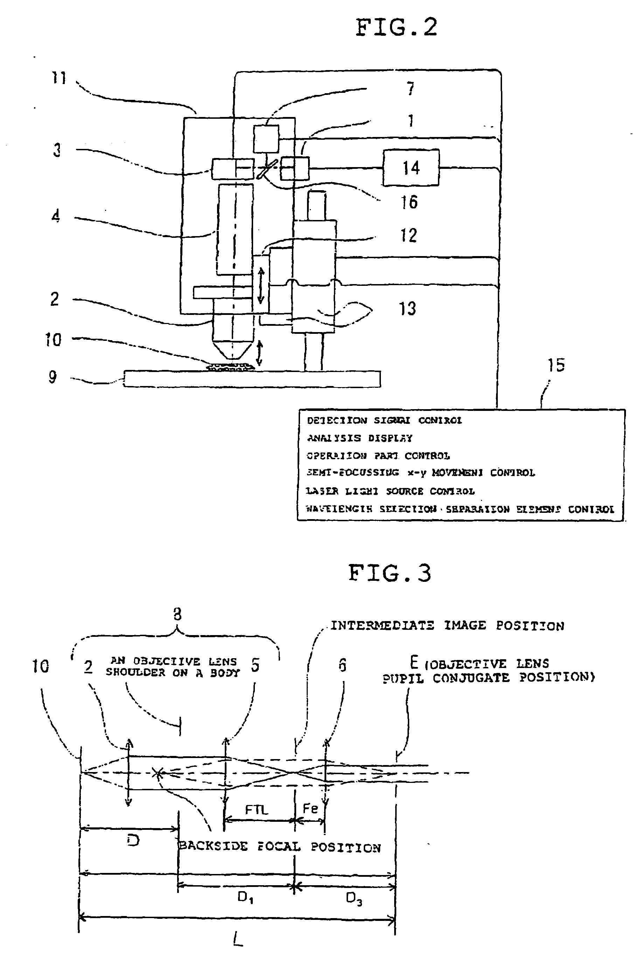

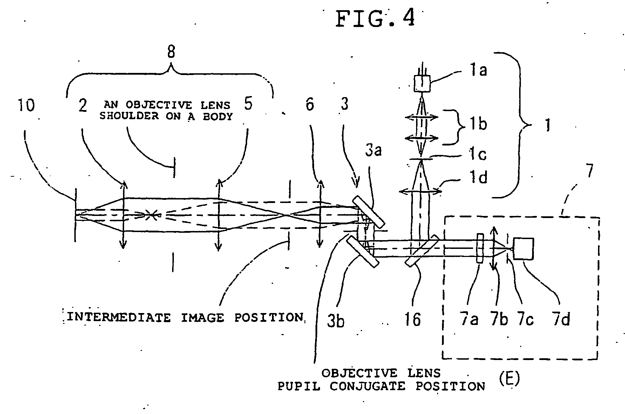

Figure 2 is an outline block diagram of the first embodiment of a laser scan type fluorescence microscope according to the present invention. Figure 3 is a diagram for explaining a principal part showing an outline optical system arranged at the main body portion in the microscope of Fig. 2. Figure 4 is a diagram showing an optical arrangement, in which a laser light source section and a detection optical system are added to the optical system of a main body portion of the microscope shown in Fig. 3.

The laser scanning fluorescence microscope of the first embodiment comprises a laser light source section, an exchangeable objective lens unit 2, a scanner section 3 as a scanning means, a lens unit 4 equipped with a pupil projection lens 6 and an image forming lens unit 5, and a detection optical system 7 in a main body 11 of a microscope.

It is desirable to use a semiconductor laser in a laser light source section 1 since a main body portion 11 of the microscope can be miniaturized by using it.

The objective lens unit 2 is constituted by the objective lens optical system 8 with the image forming lens unit 5. The objective lens optical system 8 has a function which condenses excitation light from the laser light source section 1 on a sample 10 on a stage 9. Moreover, the objective lens unit 2 is constituted so that a backside focal position may become conjugate by a neighborhood position of the scanner section 3 by the image forming lens unit 5 and a pupil projection lens 6. The image forming lens unit 5 has a function which forms an intermediate image of the sample 10.

The pupil projection lens 6 is arranged between the scanner section 3 and the objective lens optical system 8. A detection optical system 7 has a barrier-filter 7a, a lens 7b, a confocal pinhole 7c, and a light receiving optical sensors 7d, and it is constituted so that the fluorescence which is emanated from the sample 10 and transmitted through the objective lens optical system 8 and the pupil projection lens 6 may be detected by the light receiving optical sensor 7d. The laser light source section 1 has a collimating optical system, which consists of laser light source 1a, and Lenses 1b and 1d and a pinhole 1c.

Between the scanner section 3 and the detection optical system 7, a dichroic mirror 16 for leading fluorescence from the sample 10 to the detection means 7, while leading excitation light from the light source section 1 to the sample 10 is arranged.

A laser drive section 14 that drives emission of laser light from the laser light source 1a is connected to the laser light source section 1.

A focusing mechanism portion 12 for focusing the objective lens unit 2 is arranged on the main body portion 11 of the microscope.

In addition, the laser scan type fluorescence microscope has a x-y-θ main part moving mechanism 13 for adjusting an angle θ of observation to a specimen and a position in directions of two dimensions with respect to the main body portion 11 of the microscope.

The laser scan type fluorescence microscope is connected with a processing control means 15, such as a personal computer and the like. The processing control means 15 is constituted to carry out a wavelength control of the laser light source emanated by driving the laser drive section 14. a wavelength selection of the dichroic mirror, the filter, etc., control of a wavelength-separation element, drive control of the laser drive section 14, analysis and display control of detection information received by the light receiving optical sensor 7d of the detection optical system 7, drive control of the scanner section 3, drive control of a focusing mechanism portion 12, and drive control of the x-y-θ main part moving mechanism 13 and so on.

In the laser scan type fluorescence microscope of the first embodiment, the excitation light emanated from the laser light source 1a is condensed on the pinhole 1c by the lens 1b, and is converted into parallel light by the lens 1d. Then, it is led to the scanner section 3 through the diachronic mirror 16, and luminous flux is shifted to two directions of two dimensions by each rotation of Galvano mirrors 3a and 3b of the scanner section 3 to the optical axis, and by condensing at the intermediate image position through the pupil projection lens 6, image forming of the primary image is carried out. The excitation light, which is condensed at the intermediate image position, is irradiated by the sample 10 through the image forming lens unit 5 and the objective lens unit 2 in a shape like a minute spot. At this time, the excitation light irradiated to the tenth surface of the sample is scanned by the scanner section 3.

The backside focal position of the objective lens unit 2 is projected near the scanner section 3 by the image forming lens unit 5 and the pupil projection lens 8 .

The fluorescence excited on the sample 10 by irradiating excitation light is led to the detection optical system 7 through an objective lens unit 2, the image forming lens unit 5, the pupil projection lens 6, the scanner section 3, and the dichroic mirror 16. Then, only the fluorescence transmitted through the confocal pinhole 7c via the barrier filter 7a and the lens 7b is detected by the light receiving optical sensor 7d, such as a photo multiplier.

Here, the laser scan type fluorescence microscope of the first embodiment is constituted to satisfy the following condition;

$$0.15 \leq D/L \leq 0.5 \qquad \cdots (1)$$

where D is a parfocal disctance of the objective lens unit 2, and L is a distance to the conjugate position E of the backside focal position of the objective lens unit 2 arranged near the scanning means (scanner section 3) from the tenth surface of the sample.

When the condition (1) is satisfied as mentioned in the laser scan type fluorescence microscope of the first embodiment, it becomes possible to shorten a distance from the scanning means 3 to the sample 10, and miniaturization of the equipment can be achieved.

If it exceeds the maximum value of the condition (1), the focal lengths of the image forming lens 5 and the pupil projection lens 6 become short, and an interval between the pupil projection lens 6 and the scanning means 3 becomes short too much, and an interference occurs.

On the other hand, if it is less than the lower limit of the condition (1), the full length from the sample 10 to the scanning means 3 becomes long too much, and the miniaturization of the equipment becomes difficult.

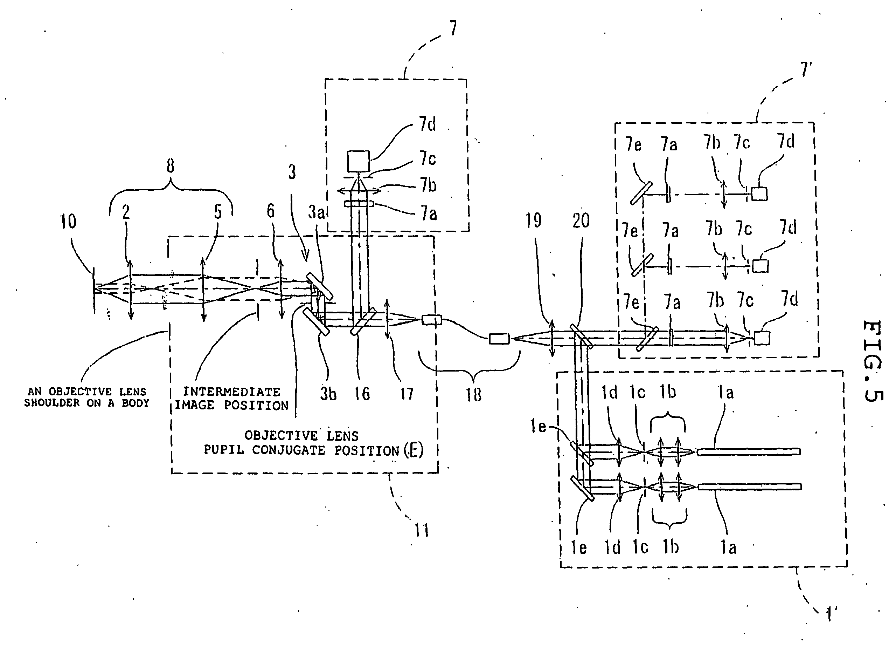

Figure 5 is a diagram showing an outline optical arrangement in a second embodiment of the laser scan type fluorescence microscope according to the present invention. Here, the same symbol is used to show a component having the same composition in the first embodiment.

The laser scan type fluorescence microscope of the second embodiment is a modification of the first embodiment, where a dichroic mirror 20, a lens 19, an optical transmission means 18, a lens 17, and the dichroic mirror 16 are arranged between the light source section 1 and the scanning means 3.

An optical transmission means 18 consists of an optical fiber, such as a single mode fiber or a multi-mode fiber. Since an end surface of the optical transmission means 18 is conjugate to a specimen surface position and a core diameter of the end surface of the fiber serves as a confocal point pinhole, the pinhole 1c of a light-source-section 1' and the pinhole 7c of a detector 7' may be arranged off an optical path, or the diameter may be big enough to a diffraction diameter. When an optical transmission means 18 is a multi-mode fiber, a confocal effect becomes weaker since an a fiber core diameter becomes large to a diffraction core, but it is possible to pick up a fluorescence image brightly. Therefore, it is good to choose a fiber according to an observation purpose. When performing a normal fluorescence observation which is not a confocal by using a multi-mode fiber for an optical transmission means 18. it is good to constitute that the pinhole 1c of the light-source-section 1', and the pinhole 7c of the detector 7' are not arranged in the optical path.

The dichroic mirror 20 is constituted so that fluorescence from the sample 10 may be led to the second detection optical system 7', while leading the excitation light from the light source section 1' the sample 10.

And it is constituted so that the fluorescence from the sample 10 which transmitted through the lens 17 is led to the second detection means 7, while excitation light from the laser light source section 1 is led to the scanning means 3 through the optical transmission means 18.

In an embodiment of Fig. 4, as for the light-source-section 1', two or more the light source 1a to the lens 1d are prepared, and a dichroic-mirror 1e is arranged accordingly.

If an optical transmission means is arranged between the laser-light-source-section 1 and the scanning means 3 as shown in the laser scan type fluorescence microscope of the second embodiment, it becomes possible to give a degree of freedom to arrangement of an optical system of the main body portion of the equipment from the scanner section 3 to the objective lens unit 2 and the laser light source section 1. For this reason, an optical system of a main body portion of a microscope can be miniaturized in a suitable size for observation in a state of a sample being alive (in vivo).

In the second embodiment, if near-infrared Femto-second pulsed laser is used for the laser light source 1', observation becomes possible as a fluorescence microscope of multiphoton excitation.

In this case, it is good enough that the detector 7 is used as a detector of the fluorescence having multiphoton excitation, and a spectrum characteristic of the dichroic mirrors 1e, 16, and 20 are selected, and pinhole diameters of the pinholes 1c and 7c are made larger enough than a diffraction core, or they are arranged off the optical path.

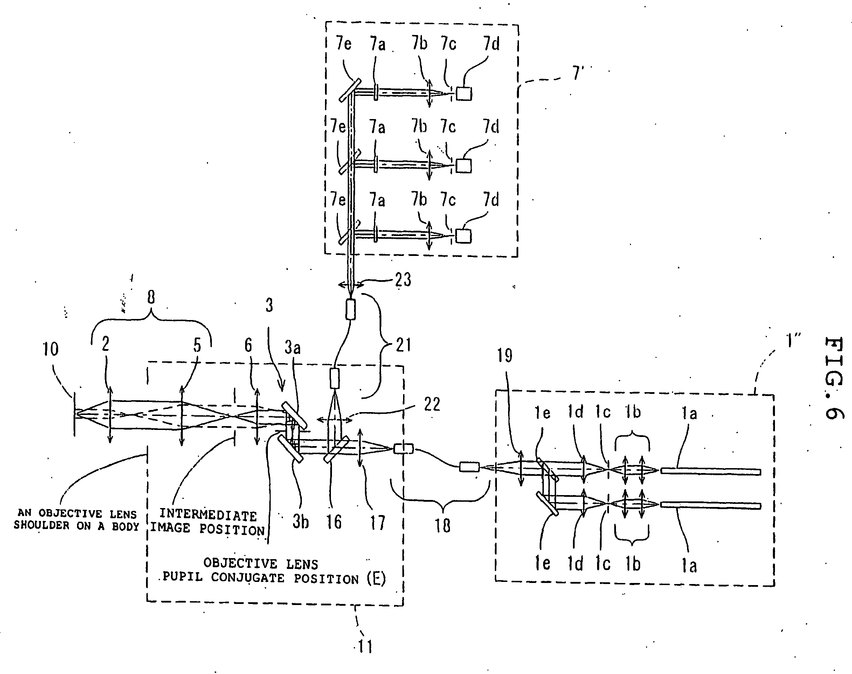

Fig. 6 is a diagram showing an outline composition of the optical system in the third embodiment of the laser scan type fluorescence microscope concerning the present invention. Here, the same symbol is used to show a component having the same composition in the second embodiment.

The laser scan type fluorescence microscope of the third embodiment is a modification of the second embodiment. A lens 22, the optical transmission means 21 which consists of an optical fiber, such as a single mode fiber or a multi-mode fiber, and a lens 23 are arranged between a dichroic mirror 16 and a detection optical system 7'. And it is constituted so that while the excitation light from light-source-section 1" is led to the sample 10 via the optical transmission means 18, the fluorescence from the sample 10 may be led to the second detection optical system 7' via the optical transmission means 21. As shown in the second embodiment, since end surfaces of optical fibers of the optical transmission means 18 and 21 are conjugate to a specimen surface position and, core diameters of the end surfaces of the fibers serve as confocal pinholes, the pinhole 1c of a light-source-section 1" and the pinhole 7c of a detector 7' may be arranged off the optical path, or the diameter may be big enough to the diffraction diameter. When optical transmission means 18 and 21 are multi-mode fibers, a confocal effect becomes weaker since a fiber core diameter becomes large to a diffraction core, but it is possible to pick up a fluorescence image brightly. Therefore, it is good to choose a fiber according to an observation purpose. When carrying out a normal fluorescence observation which is not a confocal, by using a multi-mode fiber for optical transmission means 18 and 21, it is good to constitute that the pinhole 1c of the light-source-section 1", and the pinhole 7c of the detector 7' are not arranged in the optical path.

It is desirable to constitute such way as mentioned above, because an optical system of the main part of a microscope equipment can be miniaturized much more.

As shown in the laser scan type fluorescence microscope of the third embodiment, if an optical fiber constituting the optical transmission means 18 which leads the excitation light from light-source-section 1" to a scanner section 3, and an optical fiber constituting the optical transmission means 21 which leads the fluorescence from a sample 10 through the pupil projection lens 6 to second detection optical system 7' are separately arranged, respectively, the second detection optical system 7' can avoid an influence of the self-generated fluorescence generated when the excitation light enters into the optical fiber 18, and the fluorescence generated by the sample 10 can be detected with high precision.

In the laser scan type fluorescence microscope of the third embodiment, when optical transmission means 18 and 21 are constituted by a multi-mode fiber, it is desirable to satisfy the following conditions (7) to (9).

$$2 \leqq \Phi em / \Phi ex \leqq 12 .. \quad (7)$$

$$0.61 \times (\lambda ex / NAex) < \Phi ex \quad ...(8)$$

$$0.61 \times (\lambda em / NAem) < \Phi em \quad .(9)$$

where $\Phi ex$ is a core diameter of the multi-mode fiber 18, $\Phi em$ is a core diameter of the multi-mode fiber 21, $NAex$ is an aperture size of incidence light to the multi-mode fiber 18 by the lens 19, $\lambda ex$ is an excitation wavelength, $NAem$ is an aperture size of incidence light to the multi-mode fiber 21 by the lens 22, and $\lambda em$ is a fluorescence wavelength.

If the conditions (7) to (9) are satisfied, the rate of the amount of fluorescence detected to the excitation light from the light source becomes high, and possible to pick up fluorescence image brightly, and to obtain a predetermined amount of picture information from the sample with respect to thickness direction. Therefore, operation performance is improved in observation in the state that the sample is alive (in vivo).

If less than the lower limit of the condition (7), the rate of the fluorescence detected to the excitation light from the light source becomes low, and the fluorescence image obtained becomes dark, and the picture information of the thickness direction of the sample decreases very much. Therefore, the operation performance at the time of observation worsens. On the other hand, if it exceeds the maximum value of the condition (7), the picture information covering the thickness direction of the sample enters too much, and a picture other than the fluorescence to be observed can be seen too much. Therefore, it becomes difficult to carry out a fluorescence observation.

If conditions (8) and (9) are not satisfied, the excitation light to the sample becomes weak, or the fluorescence intensity detected is dark and the picture information of the thickness direction of the sample decreases very much. Therefore the operation performance at the time of observation worsens. It is more desirable if the following condition (7-1) is satisfied.

$$4 \leqq \Phi em / \Phi ex \leqq 10 \quad \cdot \cdot \cdot (7\text{-}1)$$

the composition of the laser scan type fluorescence microscope which satisfies the conditions (7) to (9) mentioned above of the third embodiment is applicable also to a general laser scan type fluorescence microscope which does not satisfy the condition (1).

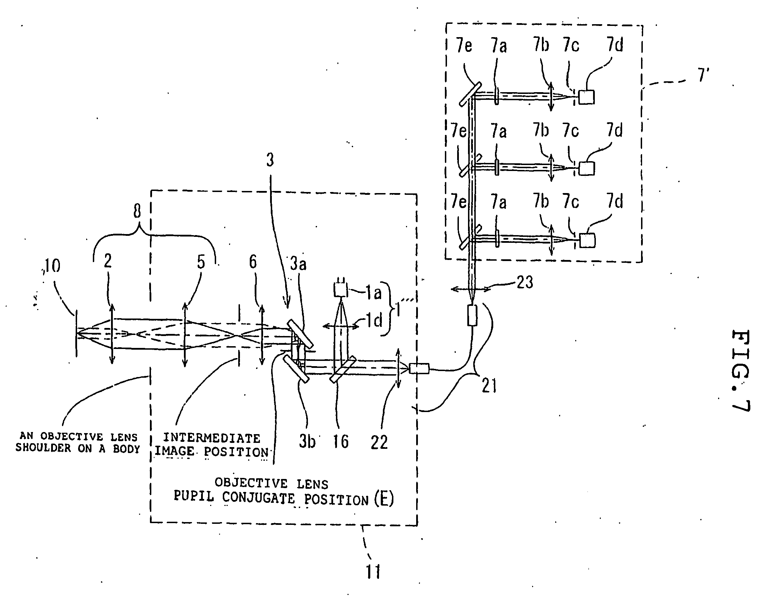

Fig. 7 is a diagram showing an outline composition of the optical system in the fourth embodiment of the laser scan type fluorescence microscope according to the present invention. Here, the same symbol is used to show a component having the same composition in the first embodiment.

The laser scan type fluorescence microscope of the fourth embodiment is a modification of the first embodiment, where a light-source-section 1''' consists of a laser light source 1a and a lens 1d. The lens 22, the optical transmission means 21, the lens 23, and the detection optical system 7' are arranged at an opposite side of Galvano mirror 3b which is separated from the dichroic mirror 16.

The optical transmission means 21 consists of an optical fiber, such as a single mode fiber or a multi-mode fiber. An optical fiber end surface of the optical transmission means 21,is conjugate to a specimen surface position, and since a core diameter of a fiber end surface serves as a confocal pinhole, the pinhole 1c ' " of the light source section 1 and the pinhole 7c of the detector 7' may be arranged off the optical path, or may have a larger diameter to a diffraction diameter. If the optical transmission means 21 is a multi-mode fiber, it is possible to pick up fluorescence image brightly, although a confocal effect becomes weaker as a fiber core diameter becomes large to a diffraction diameter, Therefore, it is good to choose a fiber according to an observation purpose.

In the laser scan type fluorescence microscope according to the present invention shown by these embodiments, parallel luminous flux deflected by the scanning means (scanner section 3) is relayed to an intermediate image position through the pupil projection lens 6.

Here, if a pupil projection lens 6 is constituted by two or more lenses, wherein a concave surface of the lens arranged nearest to the scanning-means side is directed to the scanning-means side, and a concave surface of the lens nearest to the middle-image side is directed to the middle-image side, correction of an optical performance in the intermediate image can be carried out well.

In the laser scan type fluorescence microscope of the present invention shown by each of embodiments mentioned above, it is desirable to satisfy the following condition (2).

$$0.2 \leqq Fe / D3 \leqq 0.5 \qquad \cdots (2)$$

where D3 is a distance from the conjugate position of the pupil of the objective lens unit 2 arranged near the scanning means to the intermediate image position of the image forming lens unit 5, and Fe is a focal length of the pupil projection lens 6.

If condition (2) is satisfied, it is possible to shorten a distance from the scanning means to the intermediate image position, and to miniaturize the equipment, while keeping the optical performance of the pupil projection lens good. If it exceeds the maximum value of the condition (2), the distance of the scanning means and the pupil projection lens becomes short, and an interval of the pupil projection lens and the scanning means becomes short too much, and it generates interference.

On the other hand, if less than the lower limit of the condition (2), it is difficult to miniaturize the equipment since the full length from the scanning means to the intermediate image position becomes long too much.

In the laser scan type fluorescence microscope shown by each of embodiments mentioned above, which comprises two or more lens groups, having at least one cemented lens of a positive lens and a negative lens, it is desirable to satisfy the following conditions (3) and (4).

$$0.4 \leqq FTL / D1 \leqq 1 \qquad \cdots (3)$$

$$80 \leqq \nu p \qquad \cdots (4)$$

where $\nu p$ is Abbe's Number of the positive lens in this cemented lens, FTL is a focal length of the image forming lens unit 5, and D1 is a distance from the position holding the objective lens unit 2 to the intermediate image position.

If the condition (3) is satisfied, it becomes possible to shorten a distance from the position holding the objective lens to the intermediate image position, and to miniaturize the equipment. If the condition (4) is satisfied, correction of spherical aberration and chromatic aberration at an axis generated by shortening a focal length are carried out good, and a confocal fluorescence observation from visible region to near-infrared region can be carried out.

When a confocal fluorescence microscope is constituted in the present invention here, none of the spherical aberration and the chromatic aberration at an axis is obtained as a picture by the picture obtained in fact, and accordingly, wave front aberration in each of wavelength and an observation domain is affected. If the wave front aberration of the optical system of the present invention is good, the picture obtained from the detector becomes of high resolution and high S/N. Therefore, by correcting spherical aberration and aberration off axis good, the wavefront aberration can be corrected good as a result. The same may be applied to each of aberrations described by the following-conditions.

If it exceeds the maximum value of the condition (3), an interval between the objective lens and the image forming lens becomes short too much, and it becomes difficult to arrange a focusing mechanism portion by which the free working distance of the objective lens is changed.

On the other hand, if less than the lower limit of the condition (3), it becomes difficult for the full length from the sample to the scanning means to become long too much, and miniaturization of the equipment is difficult. It is not desirable that it is less than the lower limit of the condition (4), If so, correction of the chromatic aberration at an axis and spherical aberration generated in the objective lens optical system becomes difficult, and accordingly the confocal fluorescence observation from visible region to near-infrared light of the wavelength of the excitation light, becomes difficult.

In the laser scan type microscope of each of embodiments mentioned above, the image forming lens unit 5 consists of two lens groups, having at least a front group at an intermediate image side, and a rear group at an objective lens side, where a lens group of the front group of an image forming lens unit 5 has at least one negative lens, it is desirable to satisfy the following conditions (5) and (6).

$$0.4 \leqq D2 / FTL \leqq 1 \qquad \cdots (5)$$

$$0.7 \leqq FTL1 / FTL \leqq 1.5 \qquad \cdots (6)$$

where FTL1 is a focal length of the rear group of the image forming lens unit 5, and D2 is an interval of the front group of the image forming lens unit 5 and the rear group of the image forming lens unit 5.

Thus, if the image forming lens unit 5 is constituted by two lens groups, correction of the aberration can be carried out by the rear group so that the aberration in the front group may be negated, and a suitable laser scan type fluorescence microscope can be obtained by observation in vivo.

If conditions (5) and (6) are satisfied, it becomes possible to correct astigmatism, coma aberration and magnification chromatic aberration better.

It is not desirable if it exceeds the maximum value of the condition (5), since the lens group of the front group becomes close to the intermediate image position too much and this degrades the quality of the picture image by influence of blemish and garbage on a lens surface,

On the other hand, if less than the lower limit of the condition (5), chromatic aberration on the axis and coma aberration off the axis gets worse. Therefore, it is not desirable.

If it exceeds the maximum value of the condition (6), the power of the rear group becomes weak too much, and it becomes difficult to carry out correction of color spherical aberration and coma aberration.

On the other hand, if it exceeds the lower limit of the condition (6), the power of the rear group becomes strong too much, and correction of chromatic aberration on the axis and coma aberration becomes difficult.

Hereafter, embodiments of the pupil projection lens and an objective lens optical system (an image forming lens and an objective lens) of the laser scan type microscope according to the present invention will be explained. Here, the optical system of each embodiment is applied to the laser scan type fluorescence microscope of each of embodiments shown in Figs. 2 to 7. In explanation of each embodiment, the direction of the optical system is shown in reversed direction to the direction shown in Figs. 2 to 7 for convenience sake of explanation.

[First embodiment]

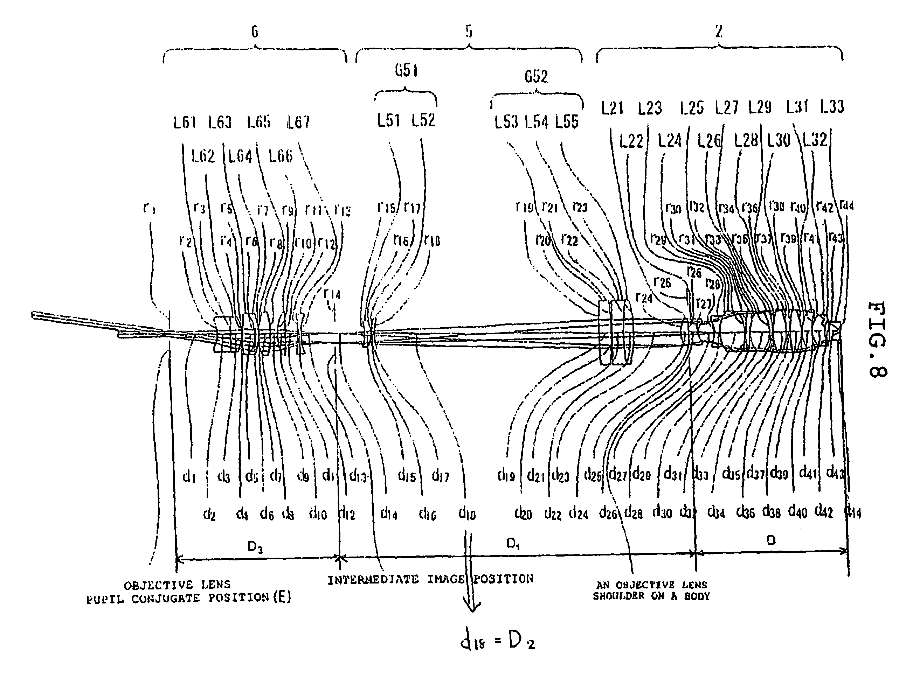

Fig. 8 is a sectional view showing a constitution of a pupil projection optical system and an objective lens optical system developed along the optical axis in a laser scan type fluorescence microscope concerning the first embodiment according to the present invention.

In the laser scan type fluorescence microscope of the first embodiment a pupil projection optical system 6 comprises, in order from a scanning-means side (left-hand side of this page), a positive cemented lens with weak power consisting of a planoconcave lens L61, a concave surface of which is directed to the scanning-means side and a planoconvex lens L62, a convex surface of which is directed to a middle-image side, a positive cemented lens consisting of a double convex lens L63, and a negative meniscus lens L64, a concave surface of which is directed to the scanning-means side, a double convex lens L65, a double convex lens L66, and a double concave lens L67.

An image forming lens unit 5 comprises, in order from the intermediate image side, a front group G51 and a rear group G52.

The front group G51 comprises, in order from the middle-image side, a positive meniscus lens L51 a concave surface of which is directed to the middle-image side, and a negative meniscus lens L52, a convex surface of which is directed to the middle-image side.

The rear group G52 comprises, in order from the middle-image side, a double convex lens L53, a positive cemented lens having a planoconcave lens L54, a concave surface of which is directed to the side of a sample 10, and a double convex lens L55.

An objective lens system comprises, in order from the intermediate image side, a negative cemented meniscus lens having a double convex lens L21 and a double concave lens L22, a positive cemented meniscus lens having a double concave lens L23 and a double convex lens L24, a negative cemented lens having a negative meniscus lens L25, a double convex lens L26 and a negative meniscus lens L27, a positive cemented lens having a double convex lens L28, a double concave lens L29 and a double convex lens L30, a positive meniscus lens L31, and a positive cemented lens having a positive meniscus lens L32 and a positive meniscus lens L33.

The objective lens mentioned above is a submerged type objective lens, where the aperture size is 0.8, the working distance is 3.3mm, and the parfocal distance is 45mm.

The objective lens unit 2 is constituted so as to be replaceable to the laser scan type fluorescence microscope of the present invention, and an observation range can be changed by changing magnification of the objective lens.

Furthermore, as the objective lens unit 2 is a submerged type objective lens, it is suitable to obtain a bright fluorescence image in a state where the sample is alive , by combining it with the laser scan type fluorescence microscope of the present invention under a state in vivo,

For example, when a nerve cell of the brain of a mouse etc. is observed, a hole for observing a cerebral nerve cell is made in a mouse head, and the head on which the hole is made is closed by an optical components, such as glass of a plane-parallel plate, and then observation is carried out through the hole of the head by combining a submerged type objective lens and the laser scan type fluorescence microscope according to the present invention. By such observation mentioned above, the fluorescence picture from a cerebral nerve cell can be obtained. Moreover, since the hole of the mouse head for observation is closed by optical components, such as glass, an observation in the state where the mouse is alive. Thus, it is effective in various applications, such as observation of growth of a cancer cell etc., and a functional elucidation of a cell.

By changing the magnification and use of the objective lens by a specimen, it can be used not only for observation In vivo but also various uses as a laser scan type fluorescence microscope miniaturized.

Next, the numerical data of optical components which constitutes the optical system of the first embodiment are shown. In the numerical data of the first embodiment, $r_1$, $r_2$, --- denote radii of curvature of individual lens surfaces; $d_1$, $d_2$,-denote thickness of individual lenses or air space between them; ndi, $nd_2$, --- denote refractive indices of individual lenses at the d line; and $v_{d1}$, $v_{d2}$, --- denote Abbe's numbers of individual lenses. The first surface is at a pupil conjugate position of an objective lens, into which luminous flux from an object point at the infinite distance enters. The objective lens is a submerged type objective lens and the aperture size is 0.8, the free working distance is 3.3mm, and the parfocal distance is 45mm.

These symbols are commonly used in the examples to be described later.

Numerical data 1

| | | | |
|---|---|---|---|
| $r_1=\infty$ | $d_1$= 14.3728 | | |
| $r_2$ =-6.588 | $d_2$=3.9 | $n_{d2}$ = 1.48749 | $v_{d2}$ = 70.23 |
| $r_3=\infty$ | $d_3$=3.48 | $n_{d3}$=1.497 | $v_{d3}$=81.54 |
| $r_4$=·9.162 | $d_4$=0.2 | | |
| $r_5$ =125.679 | $d_5$=3.52 | $n_{d5}$=1.43875 | $v_{d5}$ = 94.93 |
| $r_6$=-8.85 | $d_6$= 1 | $n_{d6}$=1.7725 | $v_{d6}$=49.6 |
| $r_7$=-20.953 | $d_7$ = 0.2 | | |
| $r_8$=21.356 | $d_8$=3.62 | $n_{d8}$ =1.43875 | $v_{d8}$ = 94.93 |
| $r_9$=-21.356 | $d_9$=1.91 | | |
| $r_{10}$=13.127 | $d_{10}$=2.39 | $n_{d10}$=1.497 | $v_{d10}$= 94.93 |
| $r_{11}$=-282.633 | $d_{11}$=3.8 | | |
| $r_{12}$=-27.852 | $d_{12}$= 1 | $n_{d12}$=1.755 | $v_{d12}$=52.32 |
| $r_{13}$=12.42 | $d_{13}$=10.1024 | | |
| $r_{14}=\infty$ (intermediate image) | | | |
| | $d_{14}$=9 | | |
| $r_{15}$=-11.68 | $d_{15}$=1.85 | $n_{d15}$=1.497 | $v_{d15}$=81.54 |

(continued)

| | | | |
|---|---|---|---|
| $r_{16}=-7.6$ | $d_{16}=0.25$ | | |
| $r_{17}=24.968$ | $d_{17}=0.78$ | $n_{d17}=1.51742$ | $v_{d17}=52.43$ |
| $r_{18}=13.675$ | $d_{18}=67.5334$ | | |
| $r_{19}=186.465$ | $d_{19}=3.5$ | $n_{d19}=1.43875$ | $v_{d19}=94.93$ |
| $r_{20}=-126.462$ | $d_{20}=0.25$ | | |
| $r_{21}=\infty$ | $d_{21}=3.5$ | $n_{d21}=1.741$ | $v_{d21}=52.64$ |
| $r_{22}=52.265$ | $d_{22}=2.98$ | $n_{d22}=1.43875$ | $v_{d22}=94.93$ |
| $r_{28}=-37.182$ | $d_{28}=16.23$ | | |
| $r_{24}=\infty$ (lens shoulder) | | | |
| | $d_{24}=-2.2345$ | | |
| $r_{25}=7.1701$ | $d_{25}=2.2311$ | $n_{d25}=1.51884$ | $v_{d25}=40.75$ |
| $r_{26}=-40.9891$ | $d_{26}=2.8243$ | $n_{d26}=1.50378$ | $v_{d26}=66.81$ |
| $r_{27}=3.3957$ | $d_{27}=4.9475$ | | |
| $r_{28}=-6.0168$ | $d_{28}=1.7182$ | $n_{d28}=1.52944$ | $v_{d28}=51.72$ |
| $r_{29}=9.3327$ | $d_{29}=7.3934$ | $n_{d29}=1.497$ | $v_{d29}=81.54$ |
| $r_{30}=-7.1338$ | $d_{30}=0.2$ | | |
| $r_{31}=40.7756$ | $d_{31}=1.1467$ | $n_{d31}=1.755$ | $v_{d31}=52.32$ |
| $r_{32}=8.0004$ | $d_{32}=5.7699$ | $n_{d32}=1.43875$ | $v_{d32}=94.93$ |
| $r_{33}=-9.8515$ | $d_{33}=1$ | $n_{d33}=1.59551$ | $v_{d33}=39.26$ |
| $r_{34}=-18.0562$ | $d_{34}=0.2$ | | |
| $r_{35}=18.8453$ | $d_{35}=3.783$ | $n_{d35}=1.43875$ | $v_{d35}=94.93$ |
| $r_{36}=-13.4657$ | $d_{36}=1.3$ | $n_{d36}=1.7725$ | $v_{d36}=49.6$ |
| $r_{37}=38.9003$ | $d_{37}=3.2938$ | $n_{d37}=1.497$ | $v_{d37}=81.54$ |
| $r_{38}=-12.2456$ | $d_{38}=0.2$ | | |
| $r_{39}=8.6474$ | $d_{39}=2.9067$ | $n_{d39}=1.56907$ | $v_{d39}=71.3$ |
| $r_{40}=15.3871$ | $d_{40}=0.2$ | | |
| $r_{41}=6.2872$ | $d_{41}=3.3861$ | $n_{d41}=1.7725$ | $v_{d41}=49.6$ |
| $r_{42}=5.4004$ | $d_{42}=1.4337$ | $n_{d42}=1.51633$ | $v_{d42}=64.14$ |
| $r_{43}=80$ | $d_{43}=3.3$ | $n_{d43}=1.33304$ | $v_{d43}=55.79$ |
| $r_{44}=\infty$ | $d_{44}=0$ | $n_{d44}=1.33304$ | $v_{d44}=55.79$ |

$D = d_{24} + d_{25} + ... + d_{44}$ ($r_{24}$ to $r_{44}$)

$D1 = d_{14} + d_{15} + ... + d_{23}$ ($r_{14}$ to $r_{24}$)

$D2 = d_{18}$ ($r_{18}$ to $r_{19}$)

$D3 = d_1 + d_2 + ... + d_{13}$ ($r_1$ to $r_{14}$)

[Second embodiment]

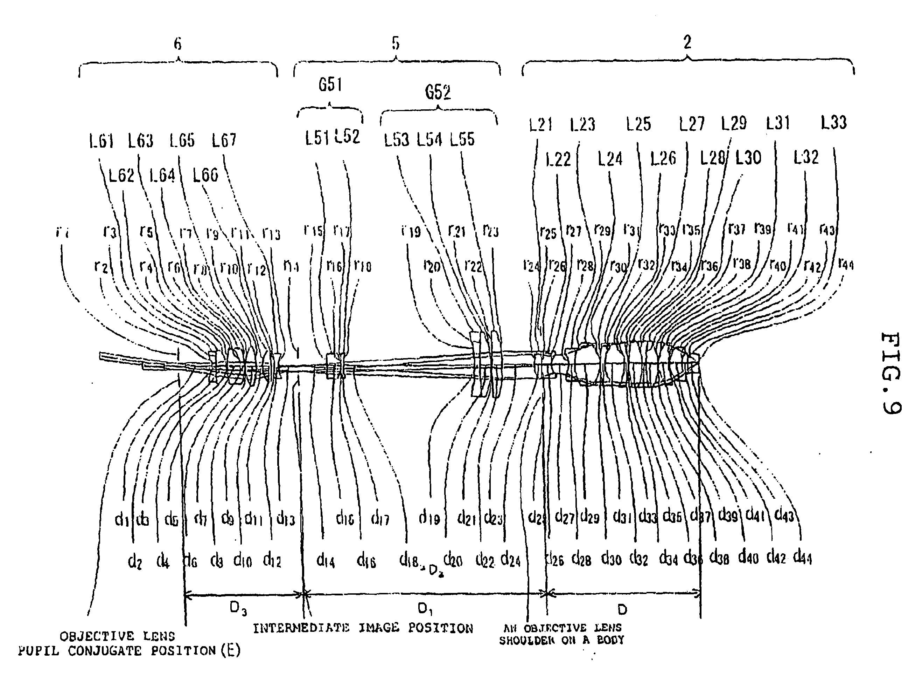

Fig. 9 is a sectional view showing a constitution of a pupil projection optical system and an objective lens optical system along the optical axis in a laser scan type fluorescence microscope concerning the second embodiment according to the present invention.

In the laser scan type fluorescence microscope of the second embodiment, a pupil projection optical system 6 comprises, in order from a scanning-means side (left-hand side of this page), a positive cemented lens with weak power consisting of a planoconcave lens L61, a concave surface of which is directed to the scanning-means side and a planoconvex lens L62, a convex surface of which is directed to a middle-image side, a positive cemented lens consisting of a double convex lens L63, and a negative meniscus lens L64, a concave surface of which is direcyed to the scanning-means side, a double convex lens L65, a double convex lens L66, and a double concave lens L67.

An image forming lens unit 5 comprises, in order from the intermediate image side, a front group G51 and a rear group G52.

The front group G51 comprises, in order from the middle-image side, a positive meniscus lens L51 a concave surface of which is directed to the middle-image side, and a negative meniscus lens L52, a convex surface of which is directed to the middle-image side.

The rear group G52 comprises, in order from the middle-image side, a positive cemented meniscus lens having a double concave lens L53 and a double convex lens L54, and a double convex lens L55.

An objective lens system 2 comprises, in order from the middle-image side like the first embodiment, a negative cemented meniscus lens having a double convex lens L21 and a double concave lens L22, a positive cemented meniscus lens having a double concave lens L23 and a double convex lens L24, a negative cemented lens having a negative meniscus lens L25, a double convex lens L26 and a negative meniscus lens L27, a positive cemented lens having a double convex lens L28, a double concave lens L29 and a double convex lens L30, and a positive meniscus lens L31, and a positive cemented lens having a positive meniscus lens L32 and a positive meniscus lens L33 The objective lens is a submerged type objective lens and the aperture size is 0.8, the free working distance is 3.3mm, and the focal parfocal distance is 45mm.

Next, the numerical data of optical components which constitutes the optical system of the second embodiment will be shown.

Numerical data 2

| | | | |
|---|---|---|---|
| $r_1=\infty$ | $d_1=9.7843$ | | |
| $r_2=-4.624$ | $d_2=1$ | $n_{d2}=1.48749$ | $v_{d2}=70.23$ |
| $r_3=\infty$ | $d_3=3.04$ | $n_{d3}=1.497$ | $v_{d3}=81.54$ |
| $r_4=-6.051$ | $d_4=0.2$ | | |
| $r_5=38.988$ | $d_5=3.8$ | $n_{d5}=1.43875$ | $v_{d5}=94.93$ |
| $r_6=-6.186$ | $d_6=1.2$ | $n_{d6}=1.7725$ | $v_{d6}=49.6$ |
| $r_7=-13.818$ | $d_7=0.2$ | | |
| $r=12.667$ | $d_8=3.19$ | $n_{d8}=1.43875$ | $v_{d8}=94.93$ |
| $r_9=-15.719$ | $d_9=1.75$ | | |
| $r_{10}=8.402$ | $d_{10}=2.44$ | $n_{d10}=1.497$ | $v_{d10}=81.54$ |
| $r_{11}=-79.63$ | $d_{11}=0.98$ | | |
| $r_{12}=19.748$ | $d_{12}=1.1$ | $n_{d12}=1.741$ | $v_{d12}=52.64$ |
| $r_{13}=6.843$ | $d_{13}=5.8022$ | | |
| $r_{14}=\infty$ (intermediate image) | | | |
| | $d_{14}=8.4919$ | | |
| $r_{15}=-22.689$ | $d_{15}=3.82$ | $n_{d15}=1.48749$ | $v_{d15}=70.23$ |
| $r_{16}=-9.23$ | $d_{16}=0.15$ | | |
| $r_{17}=20.762$ | $d_{17}=0.8$ | $n_{d17}=1.51742$ | $v_{d17}=52.43$ |
| $r_{18}=11.803$ | $d_{18}=37.613$ | | |
| $r_{19}=-30.848$ | $d_{19}=1.8$ | $n_{d19}=1.7725$ | $v_{d19}=49.6$ |
| $r_{20}=188.334$ | $d_{20}=3.11$ | $n_{d20}=1.43875$ | $v_{d20}=94.93$ |
| $r_{21}=-21.518$ | $d_{21}=0.25$ | | |
| $r_{22}=852.75$ | $d_{22}=3.05$ | $n_{d22}=1.497$ | $v_{d22}=81.54$ |
| $r_{23}=26.986$ | $d_{23}=11.122$ | | |
| $r_{24}=\infty$ (lens shoulder) | | | |
| | $d_{24}=-2.2345$ | | |
| $r_{25}=7.1701$ | $d_{25}=2.2311$ | $n_{d25}=1.51884$ | $v_{d25}=40.75$ |
| $r_{26}=-40.9891$ | $d_{26}=2.8243$ | $n_{d26}=1.50378$ | $v_{d26}=66.81$ |
| $r_{27}=3.3957$ | $d_{27}=4.9475$ | | |
| $r_{28}=-6.0168$ | $d_{28}=1.7182$ | $n_{d28}=1.52944$ | $v_{d28}=51.72$ |
| $r_{29}=9.3327$ | $d_{29}=7.3934$ | $n_{d29}=1.497$ | $v_{d29}=81.54$ |
| $r_{30}=-7.1338$ | $d_{30}=0.2$ | | |
| $r_{31}=40.7756$ | $d_{31}=1.1467$ | $n_{d31}=1.755$ | $v_{d31}=52.32$ |
| $r_{32}=8.0004$ | $d_{32}=5.7699$ | $n_{d32}=1.43875$ | $v_{d32}=94.93$ |
| $r_{33}=-9.8515$ | $d_{33}=1$ | $n_{d33}=1.59551$ | $v_{d33}=39.26$ |
| $r_{34}=-18.0562$ | $d_{34}=0.2$ | | |
| $r_{35}=18.8453$ | $d_{35}=3.783$ | $n_{d35}=1.43875$ | $v_{d35}=94.93$ |
| $r_{36}=-13.4657$ | $d_{36}=1.3$ | $n_{d36}=1.7725$ | $v_{d36}=49.6$ |

(continued)

| | | | |
|---|---|---|---|
| $r_{37}$ = 38.9003 | $d_{37}$= 3.2938 | $n_{d37}$ = 1.497 | $v_{d37}$ = 81.54 |
| $r_{38}$ = -12.2456 | $d_{38}$ = 0.2 | | |
| $r_{39}$ = 8.6474 | $d_{39}$ = 2.9067 | $n_{d39}$ = 1.56907 | $v_{d39}$ = 71.3 |
| $r_{40}$ = 15.3871 | $d_{40}$ = 0.2 | | |
| $r_{41}$ = 6.2872 | $d_{41}$ = 3.3861 1 | $n_{d41}$ = 1. 7725 | $v_{d41}$ = 49.6 |
| $r_{42}$ = 5.4004 | $d_{42}$ = 1.4337 | $n_{d42}$ = 1.51633 | $v_{d42}$ = 64.14 |
| $r_{43}$ = 80 | $d_{43}$ =3.3 | $n_{d43}$ = 1.33304 | $v_{d43}$ = 55.79 |
| $r_{44}$=∞ | $d_{44}$=0 | $n_{d44}$= 1.33304 | $v_{d44}$= 55.79 |

$D = d_{24} + d_{25} + ... + d_{44}$ ($r_{24}$ to $r_{44}$)

$D1 = d_{14} + d_{15} + ... + d_{23}$ ($r_{14}$ to $r_{24}$)

$D2 = d_{18}$ ($r_{18}$ to $r_{19}$)

$D3 = d_1 + d_2 + ... + d_{13}$ ($r_1$ to $r_{14}$)

[Third embodiment]

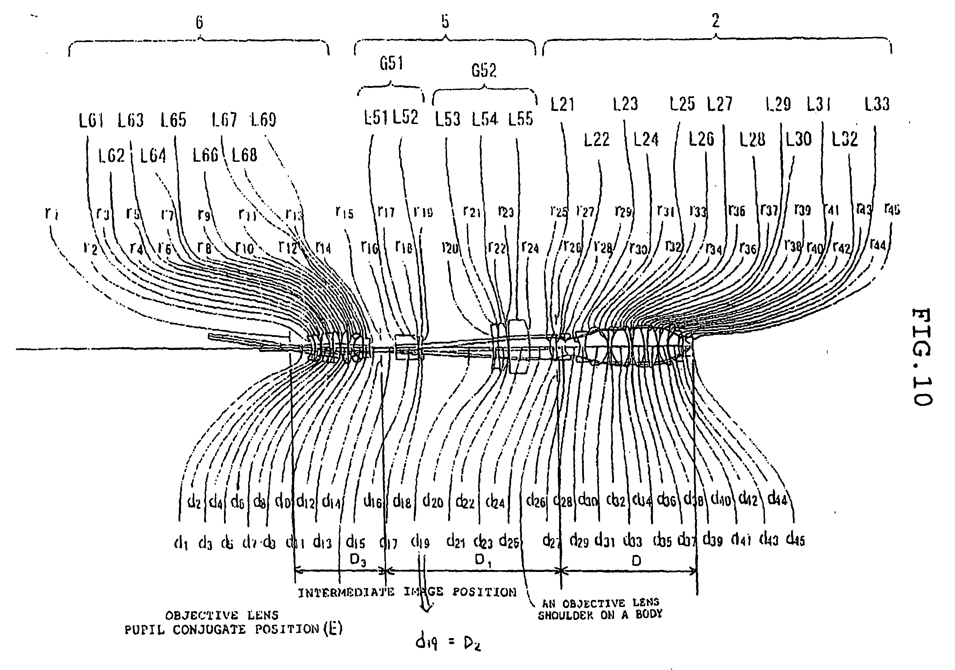

Fig. 10 is a sectional view showing a constitution of a pupil projection optical system and an objective lens optical system developed along the optical axis in a laser scan type fluorescence microscope concerning the third embodiment according to the present invention.

In the laser scan type fluorescence microscope of the third embodiment, a pupil projection optical system 6 comprises, in order from a scanning-means side (left-hand side of this page), a positive cemented lens of the weak power having a negative-meniscus-lens L61', a concave surface of which is directed to the scanning-means side and a positive-meniscus-lens L62' , a concave surface of which is directed to the scanning-means side, a positive cemented lens having a double convex lens L63, a double concave lens L64 and a double convex lens L60, a double convex lens L66, and a cemented negative lens consisting of a negative-meniscus-lens L67'a convex surface of which is directed to the scanning-means side, a double convex lens L68, and a double concave lens L69.

An image forming lens unit 5 comprises, in order from the intermediate image side, a front group G51 and a rear group G52.

The front group G51 comprises, in order from the middle-image side, a positive meniscus lens L51 a concave surface of which is directed to the middle-image side, and a negative meniscus lens L52, a convex surface of which is directed to the middle-image side.

The rear group G52 comprises, in order from the middle-image side, a positive cemented meniscus lens having a double concave lens L53' and a double convex lens L54', and a double convex lens L55.

An objective lens system comprises, like the first embodiment, in order from the intermediate image side, a negative cemented meniscus lens having a double convex lens L21 and a double concave lens L22, a positive cemented meniscus lens having a double concave lens L23 and a double convex lens L24, a negative cemented lens having a negative meniscus lens L25, a double convex lens L26 and a negative meniscus lens L27, a positive cemented lens having a double convex lens L28, a double concave lens L29 and a double convex lens L30, and a positive meniscus lens L31, and a positive cemented lens consisting of a positive meniscus lens L32 and a positive meniscus lens L33. The objective lens is a submerged type objective lens and the aperture size is 0.8, the free working distance is 3.3mm, and the parfocal distance is 45mm.

Next, the numerical data of optical components which constitutes the optical system of the third embodiment will be shown.

Numerical data 3

| | | | |
|---|---|---|---|
| $r_1$=∞ | $d_1$ =7.4167 | | |
| $r_2$=-4.0824 | $d_2$=1.0919 | $n_{d2}$=1.603 | $v_{d2}$ =65.44 |
| $r_3$=-8.3801 | $d_3$=1.7878 | $n_{d3}$= 1.7725 | $v_{d3}$ = 49.6 |
| $r_4$=-5.7535 | $d_4$=0.2 | | |
| $r_5$ =25.6339 | $d_5$ =2.8925 | $n_{d5}$= 1.43875 | $v_{d5}$ = 94.93 |
| $r_6$=-6.4112 | $d_6$=1 | $n_{d6}$=1.7725 | $v_{d6}$49.6 |
| .$r_7$=137.8602 | $d_7$=2.3153 | $n_{d7}$=1.497 | $v_{d7}$=81.54 |

(continued)

| | | | |
|---|---|---|---|
| $r_8 = -9.4621$ | $d_8 = 0.2$ | | |
| $r_9 = 10.6954$ | $d_9 = 2.4857$ | $n_{d9} = 1.497$ | $v_{d9} = 81.54$ |
| $r_{10} = -26.6514$ | $d_{10} = 0.15$ | | |
| $r_{11} = 6.9368$ | $d_{11} = 1.5367$ | $n_{d11} = 1.7725$ | $v_{d11} = 49.6$ |
| $r_{12} = 3.8697$ | $d_{12} = 3.2119$ | $n_{d12} = 1.497$ | $v_{d12} = 81.54$ |
| $r_{13} = -11.1848$ | $d_{13} = 1.8514$ | $n_{d13} = 1.755$ | $v_{d13} = 52.32$ |
| $r_{14} = 6.5045$ | $d_{14} = 3.935$ | | |
| $r_{15} = \infty$ | $d_{15} = 5$ | | |
| $r_{16} = -63.258$ | $d_{16} = 7.6$ | $n_{d16} = 1.603$ | $v_{d16} = 65.44$ |
| $r_{17} = -14.383$ | $d_{17} = 0.15$ | | |
| $r_{18} = 21.994$ | $d_{18} = 1.2$ | $n_{d18} = 1.51742$ | $v_{d18} = 52.43$ |
| $r_{19} = 13.279$ | $d_{19} = 23.5638$ | | |
| $r_{20} = -26.882$ | $d_{20} = 1.6$ | $n_{d20} = 1.788$ | $v_{d20} = 47.37$ |
| $r_{21} = 75.482$ | $d_{21} = 3.42$ | $n_{d21} = 1.43875$ | $v_{d21} = 94.93$ |
| $r_{22} = -18.536$ | $d_{22} = 0.15$ | | |
| $r_{28} = 141.209$ | $d_{23} = 7$ | $n_{d28} = 1.497$ | $v_{d23} = 81.54$ |
| $r_{24} = -22.954$ | $d_{24} = 9$ | | |
| $r_{25} = \infty$ (lens shoulder) | | | |
| | $d_{25} = -2.2345$ | | |
| $r_{26} = 7.1701$ | $d_{26} = 2.2311$ | $n_{d26} = 1.51884$ | $v_{d26} = 40.75$ |
| $r_{27} = -40.9891$ | $d_{27} = 2.8243$ | $n_{d27} = 1.50378$ | $v_{d27} = 66.81$ |
| $r_{28} = 3.3957$ | $d_{28} = 4.9475$ | | |
| $r_{29} = -6.0168$ | $d_{29} = 1.7182$ | $n_{d29} = 1.52944$ | $v_{d29} = 51.72$ |
| $r_{30} = 9.3327$ | $d_{30} = 7.3934$ | $n_{d30} = 1.497$ | $v_{d30} = 81.54$ |
| $r_{31} = -7.1338$ | $d_{31} = 0.2$ | | |
| $r_{32} = 40.7756$ | $d_{32} = 1.1467$ | $n_{d32} = 1.755$ | $v_{d32} = 52.32$ |
| $r_{33} = 8.0004$ | $d_{33} = 5.7699$ | $n_{d33} = 1.43875$ | $v_{d33} = 94.93$ |
| $r_{34} = -9.8515$ | $d_{34} = 1$ | $n_{d34} = 1.59551$ | $v_{d34} = 39.26$ |
| $r_{35} = -18.0562$ | $d_{35} = 0.2$ | | |
| $r_{36} = 18.8453$ | $d_{36} = 3.783$ | $n_{d36} = 1.43875$ | $v_{d36} = 94.93$ |
| $r_{37} = -13.4657$ | $d_{37} = 1.3$ | $n_{d37} = 1.7725$ | $v_{d37} = 49.6$ |
| $r_{38} = 38.9003$ | $d_{38} = 3.2938$ | $n_{d38} = 1.497$ | $v_{d38} = 81.54$ |
| $r_{39} = -12.2456$ | $d_{39} = 0.2$ | | |
| $r_{40} = 8.6474$ | $d_{40} = 2.9067$ | $n_{d40} = 1.56907$ | $v_{d40} = 71.3$ |
| $r_{41} = 15.3871$ | $d_{41} = 0.2$ | | |
| $r_{42} = 6.2872$ | $d_{42} = 3.3861$ | $n_{d42} = 1.7725$ | $v_{d42} = 49.6$ |
| $r_{43} = 5.4004$ | $d_{43} = 1.4337$ | $n_{d43} = 1.51633$ | $v_{d43} = 64.14$ |
| $r_{44} = 80$ | $d_{44} = 3.3$ | $n_{d44} = 1.33304$ | $v_{d44} = 55.79$ |
| $r_{45} = \infty$ | $d_{45} = 0$ | $n_{d45} = 1.33304$ | $v_{d45} = 55.79$ |

$D = d_{25} + d_{26} + \ldots + d_{45}$ ($r_{25}$ to $r_{45}$)

$D1 = d_{15} + d_{16} + \ldots + d_{24}$ ($r_{15}$ to $r_{25}$)

$D2 = d_{19}$ ($r_{19}$ to $r_{20}$)

$D3 = d_1 + d_2 + \ldots + d_{14}$ ($r_1$ to $r_{15}$)

Next, numerical parameters used for the condition of the laser scan type microscope of each of embodiments mentioned above are shown in Table 1. Wavefront aberration in each wavelength in each embodiment is shown in Table 2. In the submerged type objective lens system, the aperture size of the objective lens is 0.8, and the focal length is 45mm, and as for the observation range, the image height is 0.15 at the specimen side. Numerical parameters are shown in Table 3 in case that the laser scanning microscope of each embodiment is constituted as a laser scan type microscope using a multi-mode fiber for the optical transmission means 18 and 21 in the third embodiment showing in Fig. 6. Since difference between wavelengths of excitation light and fluorescence is small, wavelengths of the excitation light and of the fluorescence are treated as the same in Table 3, for convenience.
Table 1

|  | First embodiment | Second embodiment | Third embodiment |
|---|---|---|---|
| Focal length of a pupil projection lens: Fe | 18.01 | 12 | 9.36 |
| Focal length of an image forming lens : FTL | 75 | 50 | 38.99 |
| Distance from a pupil to a sample: L | 200.37 | 149.96 | 133.76 |
| Focal length of an objective lens: D | 45 | 45 | 45 |
| Distance between an objective lens front group and a rear group: D2 | 67.53 | 37.61 | 23.56 |
| Full length of a pupil projection lens: D3 | 49.5 | 34.99 | 30.08 |
| Distance from an objective lens shoulder to an intermediate image: D1 | 105.87 | 70.20 | 58.68 |
| Focal length of an image forming lens front group: FTL1 | 85.44 | 62.51 | 48.91 |
| Condition (1) : D / L | 0.22 | 0.30 | 0.34 |
| Condition (2) : Fe / D3 | 0.36 | 0.35 | 0.31 |
| Condition (3): FTL / D 1 | 0.71 | 0.71 | 0.66 |
| Condition (4) : = v p | 95.00 | 95.00 | 95.00 |
| Condition (5): D2/FTL | 0.90 | 0.75 | 0.60 |
| Condition (6): FTL1/FTL | 1.14 | 1.25 | 1.25 |

| Table 2 | | 435.8 nm | 486.13 nm | 546.07 nm | 587.56 nm | 656.27 nm | 800 nm | 1000 nm |
|---|---|---|---|---|---|---|---|---|
| Wavefront aberration $\lambda$ at each wavelength (nm) | | | | | | | | |
| Embodiment 1 | IH = 0 | 0.0257 | 0.0168 | 0.0068 | 0.0019 | 0.0065 | 0.015 | 0.0206 |
| | IH=0.075 | 0.0525 | 0.033 | 0.0131 | 0.0148 | 0.0147 | 0.0203 | 0.0248 |
| | IH=0.15 | 0.0796 | 0.0858 | 0.0655 | 0.055 | 0.0311 | 0.009 | 0.0036 |
| Embodiment 2 | IH = 0 | 0.0258 | 0.0164 | 0.0061 | 0.0033 | 0.0096 | 0.0178 | 0.0243 |
| | IH=0.075 | 0.0551 | 0.037 | 0.023 | 0.0181 | 0.016 | 0.0212 | 0.0259 |
| | IH=0.15 | 0.1 | 0.1 | 0.082 | 0.0692 | 0.0456 | 0.0186 | 0.0051 |
| Embodiment 3 | IH = 0 | 0.0306 | 0.0317 | 0.0262 | 0.0221 | 0.0126 | 0.0188 | 0.0256 |
| | IH=0.075 | 0.0476 | 0.0286 | 0.0188 | 0.0165 | 0.0155 | 0.0219 | 0.0269 |
| | IH=0.15 | 0.0215 | 0.0815 | 0.0683 | 0.0627 | 0.0375 | 0.0152 | 0.0269 |

| Table 3 (common to each embodiment) | | | | | |
|---|---|---|---|---|---|
| $\Phi$ e x | 9 | 9 | 9 | 9 | 9 |
| $\Phi$ e m | 18 | 36 | 50 | 90 | 108 |
| $\Phi$ e x / $\Phi$ e m | 2 | 4 | 5.5 | 10 | 12 |
| NAex | 0.1 | 0.1 | 0.1 | 0.1 | 0.1 |

(continued)

| Table 3 (common to each embodiment) | | | | | |
|---|---|---|---|---|---|
| NAem | 0.1 | 0.1 | 0.2 | 0.2 | 0.2 |
| | when $\lambda$ x, $\lambda$ em $\fallingdotseq$ 400nm | | | | |
| $0.61 \times (\lambda$ ex / Aex$)$ | 2.4 | 2.4 | 2.4 | 2.4 | 2.4 |
| $0.61 \times (\lambda$ em / NAem$)$ | 2.4 | 2.4 | 1.2 | | 1.2 |
| | when $\lambda$ x, $\lambda$ em $\fallingdotseq$ 000nm | | | | |
| $0.61 \times (\lambda$ ex / NAex$)$ | 6.1 | 6.1 | 6.1 | 6.1 | 6.1 |
| $0.61 \times (\lambda$ em / NAem$)$ | 6.1 | 6.1 | 3.1 | 3.1 | 3.1 |

## INDUSTRIAL USEFULNESS

The laser scan type fluorescence microscope according to the present invention is very useful practically, since it is small sized and has a good operation performance, wherein observation of a sample in a state (in vivo) by using wavelength from a visible region to a near-infrared region can be carried out with high precision,

## Claims

1.  A laser scan type fluorescence microscope comprising
    a laser light source section (1), an objective lens optical system (8) by which excitation light from the laser light source section (1) is condensed on a sample (10), a scanning means (3) by which the excitation light from the laser light source section (1) is scanned on a surface of the sample (10), a pupil projection lens (6) arranged between the scanning means (3) and the objective lens optical system (8) and a detection optical system (7) for detecting fluorescence which is emanated from the sample (10) and has penetrated the objective lens optical system (8) and the pupil projection lens (6), wherein the objective lens optical system (8) further comprises an exchangeable objective lens (2) and an image forming lens (5) for forming an intermediate image of the sample (10), wherein a backside focal position of the objective lens (2) is conjugate at a position near the scanning means (3) by the image forming lens(5) and the pupil projection lens (6), satisfying the condition

$$0.15 \leq D / L \leq 0.5$$

where D is a parfocal distance of the objective lens (2), and L is a distance from the sample (10) surface to the conjugate position of the backside focal position of the objective lens (2) arranged near the scanning means (3), the leas seams type fluorescence microsope being **characterized in that** the image forming lens (5) consists of two lens groups having a front group at a side of an intermediate image and a rear group at a side of the objective lens (2), and the lens group of the front group of the image forming lens (5) has at least one negative lens, and wherein the following conditions are further satisfied:

$$0.4 \leq D2/FTL \leq 1$$

$$0.7 \leq FTL1/FTL \leq 1.5$$

where FTL is a focal length of the image forming lens (5), FTL1 is a focal length of the rear group of the image forming lens (5), and D2 is an interval between the front group and the rear group of the image forming lens (5).

2.  The laser scan type fluorescence microscope according to claim 1, comprising optical transmission means (18) which leads the excitation light from the laser light source section (1) to the scanning means (3).

3.  The laser scan type fluorescence microscope according to claim 1 or 2, wherein the pupil projection lens (6) comprises two or more lens groups, a concave surface of a lens at the nearest side to the scanning means (3) is directed to the scanning means (3) side, a concave surface of a lens at the nearest side to the intermediate image side is directed to the intermediate image side, and the following condition is satisfied:

$$0.2 \leq Fe/D3 \leq 0.5$$

where D3 is a distance from the conjugate position of the pupil of the objective lens located near the scanning means to the intermediate image position of the image forming lens , and Fe is a focal length of the pupil projection lens.

4. The laser scan type fluorescence microscope according to any one of claims 1 to 3, which comprises two or more lens groups, and comprises at least one cemented lens having a positive lens and a negative lens, and the following conditions are satisfied:

$$0.4 \leq FTL/D1 \leq 1$$

$$80 \leq \nu p$$

where $\nu p$ is Abbe's number of the positive lens in the cemented lens, and D1 is a distance from the position of a shoulder of lens to the intermediate image position.

5. The laser scan type fluorescence microscope according to claim 1, comprising a first multi-mode fiber which leads the excitation light from the laser light source section (1) to the scanning means (3), a second multi-mode fiber which leads fluorescence from a sample (10) to the detection optical system (7), a first lens by which entry of the excitation light to the first multi-mode fiber is carried out, and a second lens by which entry of the fluorescence to the second multi-mode fiber is carried out, and the following conditions are satisfied

$$2 \leq \phi em / \phi ex \leq 12$$

$$0.61 \times (\lambda ex/NAex) < \phi ex$$

$$0.61 \times (\lambda em/NAem) < \phi em$$

where $\Phi ex$ is a diameter of a core of the first multi-mode fiber, $\Phi em$ is a diameter of a core of the second multi-mode fiber, NAex is the size of an aperture by which entry to the first multi-mode fiber by the first lens is carried out, $\lambda ex$ is the excitation wavelength, NAem is the size of an aperture by which entry to the second multi-mode fiber by the second lens is carried out, and $\lambda em$ is the fluorescence wavelength.

6. The laser scan type fluorescence microscope according to claim 1 or 2, comprising an optical transmission means (18, 21) which leads fluorescence from a sample (10) which transmitted through the pupil projection lens (6) to the detection optical system (7).

7. The laser scan type fluorescence microscope according to any one of claims 1 to 4, comprising an optical transmission means (18, 21) by which fluorescence from the sample (10) is lead to the detection optical system (7), while excitation light from the laser light source section (1) is led to the scanning means (3).

8. The laser scan type fluorescence microscope according to any one of claims 1 to 5, comprising a first optical transmission means (18) which leads excitation light from the laser light source section (1) to the scanning means (3), and a second optical transmission means (21) which leads fluorescence from the sample (10) to the detection optical system (7).

9. The laser scan type fluorescence microscope according to any one of claims 1 to 6, wherein the objective lens (2) is a submerged type objective lens.

10. The laser scan type fluorescence microscope according to any one of claims 1 to 4, wherein the laser light source (1) consists of a semiconductor laser.

11. The laser scan type fluorescence microscope according to any one of claims 1 to 4, wherein the detector (7) is constituted on the main body portion of a microscope.

12. The laser scan type fluorescence microscope according to claim 1, comprising a first multi-mode fiber which leads the excitation light from the laser light source section (1) to the scanning means (3), a second multi-mode fiber which leads fluorescence from a sample (10) to the detection optical system (7), a first lens by which entry of the excitation light to the first multi-mode fiber is carried out and a second lens in which entry of the fluorescence of the second multi-mode fiber is carried out, wherein all of the following conditions are satisfied:

$$4 \leq \phi em / \phi ex \leq 10$$

$$0.61 \times (\lambda ex/NAex) < \phi ex$$

$$0.61 \times (\lambda em /NAem) < \phi em$$

where $\Phi ex$ is a diameter of a core of the first multi-mode fiber, $\phi em$ is a diameter of a core of the second multi-mode fiber, NAex is the size of an aperture by which entry to the first multi-mode fiber by the first lens is carried out, $\lambda ex$ is the excitation wavelength, NAem is the size of an aperture by which entry to the second multi-mode fiber by the second lens is carried out, and $\lambda em$ is the fluorescence wavelength.

**Patentansprüche**

1. Laserrasterfluoreszenzmikroskop umfassend
einen Laserlichtquellenabschnitt (1), ein optisches Objektivlinsensystem (8), durch das Anregungslicht vom Laserlichtquellenabschnitt (1) auf eine Probe (10) kondensiert wird, ein Scanmittel (3), durch welches das Anregungslicht des Laserlichtquellenabschnitts (1) über eine Probenoberfläche (10) gescannt wird, eine Eintrittsprojektionslinse (6), welche zwischen dem Scanmittel (3) und dem optischen Objektivlinsensystem (8) angeordnet ist, und ein optisches Detektionssystem (7) zum Detektieren einer Fluoreszenz, die von der Probe (10) ausgestrahlt wird und das optische Objektivlinsensystem (8) und die Eintrittsprojektionslinse (6) durchdrungen hat, wobei das optische Objektivlinsensystem (8) ferner eine austauschbare Objektivlinse (2) und eine Bilderzeugungslinse (5) zum Erzeugen eines Zwischenbildes der Probe (10) umfasst, wobei eine rückseitige Brennpunktposition der Objektivlinse (2) durch die Bilderzeugungslinse (5) und die Eintrittsprojektionslinse (6) an einer Position in der Nähe des Scanmittels (3) gebeugt wird, wobei die Bedingung

$$0.15 \leq D / L \leq 0.5$$

erfüllt ist, wobei D einen parafokalen Abstand der Objektivlinse (2) und L einen Abstand von der Probenoberfläche (10) zur Beugungsposition der rückseitigen Brennpunktposition der Objektivlinse (2), die in der Nähe des Scanmittels (3) angeordnet ist, darstellt, und wobei das Laserrasterfluoreszenzmikroskop **dadurch gekennzeichnet ist, dass** die Bilderzeugungslinse (5) aus zwei Linsengruppen mit einer vorderen Gruppe an einer Zwischenbildseite und einer hinteren Gruppe an einer Objektivlinsenseite (2) besteht, und wobei die Linsengruppe der vorderen Gruppe der Bilderzeugungslinse (5) wenigstens eine Zerstreuungslinse aufweist, und wobei die folgenden Bedingungen ferner erfüllt sind:

$$0.4 \leq D2/FTL \leq 1$$

$$0.7 \leq FTL1/FTL \leq 1.5$$

wobei FTL eine Brennweite der Bilderzeugungslinse (5) ist, FTL1 eine Brennweite der hinteren Gruppe der Bilderzeugungslinse (5) ist, und D2 einen Abstand zwischen der vorderen Gruppe und der hinteren Gruppe der Bilderzeugungslinse (5) darstellt.

2. Laserrasterfluoreszenzmikroskop nach Anspruch 1, ferner umfassend ein Lichtübertragungsmittel (18), welches das Anregungslicht vom Laserlichtquellenabschnitt (1) zum Scanmittel (3) führt.

3. Laserrasterfluoreszenzmikroskop nach Anspruch 1 oder 2, wobei die Eintrittsprojektionslinse (6) zwei oder mehrere Linsengruppen umfasst, wobei eine konkave Oberfläche einer zum Scanmittel (3) am nächsten gelegenen Linse in Richtung des Scanmittels (3) gerichtet ist, wobei eine konkave Oberfläche einer zur Zwischenbildposition am nächsten gelegenen Linse in Richtung der Zwischenbildposition gerichtet ist, und wobei die folgende Bedingung erfüllt ist:

$$0.2 \leq Fe/D3 \leq 0.5$$

wobei D3 einen Abstand von der Beugungsposition des Eintritts der Objektivlinse, welche sich in der Nähe des Scanmittels befindet, zu der Zwischenbildposition der Bilderzeugungslinse darstellt und Fe eine Brennweite der Eintrittsprojektionslinse darstellt.

4. Laserrasterfluoreszenzmikroskop nach einem der Ansprüche 1 bis 3, welches zwei oder mehrere Linsengruppen umfasst und mindestens eine verkittete Linse umfasst, die eine Sammellinse und eine Zerstreuungslinse umfasst, und wobei die folgende Bedingung erfüllt ist:

$$0.4 \leq FTL/D1 \leq 1$$

$$80 \leq \nu p$$

wobei $\nu p$ die Abbe-Zahl der Sammellinse in der verkitteten Linse ist und D1 ein Abstand von der Schulterposition der Linse zur Position des Zwischenbildes ist.

5. Laserrasterfluoreszenzmikroskop nach Anspruch 1, umfassend eine erste Multimodenfaser, die das Anregungslicht vom Laserlichtquellenabschnitt (1) zum Scanmittel (3) führt, eine zweite Multimodenfaser, die Fluoreszenzlicht von einer Probe (10) zum optischen Detektionssystem (7) führt, eine erste Linse, durch die eine Einkopplung des Anregungslichtes in die erste Multimodenfaser durchgeführt wird, und eine zweite Linse, durch die eine Einkopplung des Fluoreszenzlichtes in die zweite Multimodenfaser durchgeführt wird, und wobei die folgenden Bedingungen erfüllt sind:

$$2 \leq \phi em / \phi ex \leq 12$$

$$0.61 \times (\lambda ex/NAex) < \phi ex$$

$$0.61 \times (\lambda em/NAem) < \phi em$$

wobei $\phi ex$ einen Kerndurchmesser der ersten Multimodenfaser darstellt, $\phi em$ einen Kerndurchmesser der zweiten Multimodenfaser darstellt, NAex eine Aperturgröße ist, durch die eine Einkopplung in eine erste Multimodenfaser durch die erste Linse durchgeführt wird, $\lambda ex$ die Anregungswellenlänge ist, NAem die Aperturgröße ist, durch die eine Einkopplung in die zweite Multimodenfaser durch die zweite Linse durchgeführt wird, und $\lambda em$ die Fluoreszenzwellenlänge ist.

6. Laserrasterfluoreszenzmikroskop nach Anspruch 1 oder 2, umfassend ein Lichtübertragungsmittel (18, 21), welches Fluoreszenzlicht von einer Probe (10), das durch die Eintrittsprojektionslinse transmittiert wird, zum optischen Detektionssystem (7) führt.

7. Laserrasterfluoreszenzmikroskop nach einem der Ansprüche 1 bis 4, umfassend ein Lichtübertragungsmittel (18, 21), durch welches Fluoreszenzlicht von der Probe (10) zum optischen Detektionssystem (7) geführt wird, während Anregungslicht vom Laserlichtquellenabschnitt (1) zum Scanmittel (3) geführt wird.

8. Laserrasterfluoreszenzmikroskop nach einem der Ansprüche 1 bis 5, umfassend ein erstes Lichtübertragungsmittel (18), welches Anregungslicht vom Laserlichtquellenabschnitt (1) zum Scanmittel (3) führt, und ein zweites Lichtübertragungsmittel (21), welches Fluoreszenzlicht von der Probe (10) zum optischen Detektionssystem (7) führt.

9. Laserrasterfluoreszenzmikroskop nach einem der Ansprüche 1 bis 6, wobei die Objektivlinse (2) vom Typ einer eingetauchten Objektivlinse ist.

10. Laserrasterfluoreszenzmikroskop nach einem der Ansprüche 1 bis 4, wobei die Laserlichtquelle (1) aus einem Halbleiterlaser besteht.

11. Laserrasterfluoreszenzmikroskop nach einem der Ansprüche 1 bis 4, wobei der Detektor (7) im Hauptkörperabschnitt eines Mikroskops ausgebildet ist.

12. Laserrasterfluoreszenzmikroskop nach Anspruch 1, umfassend eine erste Multimodenfaser, welche das Anregungslicht vom Laserlichtquellenabschnitt (1) zum Scanmitteln (3) führt, eine zweite Multimodenfaser, welche Fluoreszenzlicht von einer Probe (10) zum optischen Detektionssystem (7) führt, eine erste Linse, durch welche eine Einkopplung des Anregungslichtes in die erste Multimodenfaser durchgeführt wird, und eine zweite Linse, durch welche eine Einkopplung des Fluoreszenzlichtes in die zweite Multimodenfaser durchgeführt wird, wobei alle der folgenden Bedingungen erfüllt sind:

$$4 \le \phi em / \phi ex \le 10$$

$$0.61 \times (\lambda ex/NAex) < \phi ex$$

$$0.61 \times (\lambda em/NAem) < \phi em$$

wobei $\phi ex$ einen Kerndurchmesser der ersten Multimodenfaser darstellt, $\phi em$ einen Kerndurchmesser der zweiten Multimodenfaser darstellt, NAex eine Aperturgröße ist, durch welche eine Einkopplung in die erste Multimodenfaser durch die erste Linse durchgeführt wird, $\lambda ex$ die Anregungswellenlänge ist, NAem eine Aperturgröße ist, durch welche eine Einkopplung in die zweite Multimodenfaser durch die zweite Linse durchgeführt wird, und $\lambda em$ die Fluoreszenzwellenlänge ist.

## Revendications

1. Microscope à fluorescence de type à balayage laser comprenant
   une section de source de lumière laser (1), un système optique d'objectif (8) par lequel une lumière d'excitation provenant de la section de source de lumière laser (1) est condensée sur un échantillon (10), un moyen de balayage (3) par lequel la lumière d'excitation provenant de la section de source de lumière laser (1) est balayée sur une surface de l'échantillon (10), une lentille de projection à pupille (6) agencée entre le moyen de balayage (3) et le système optique d'objectif (8) et un système optique de détection (7) pour détecter une fluorescence qui émane de l'échantillon (10) et a pénétré le système optique d'objectif (8) et la lentille de projection à pupille (6), dans lequel le système optique d'objectif (8) comprend en outre un objectif (2) interchangeable et une lentille de formation d'image (5) pour former une image intermédiaire de l'échantillon (10), dans lequel une position focale arrière de l'objectif (2) est conjuguée à une position proche du moyen de balayage (3) par la lentille de formation d'image (5) et la lentille de projection à pupille (6), satisfaisant à la condition

$$0,15 \leq D/L \leq 0,5$$

où D est une distance parfocale de l'objectif (2), et L est une distance de la surface de l'échantillon (10) jusqu'à la position conjuguée de la position focale arrière de l'objectif (2) agencée à proximité du moyen de balayage (3), le microscope à fluorescence de type à balayage laser étant **caractérisé en ce que** la lentille de formation d'image (5) consiste en deux groupes de lentilles ayant un groupe avant sur un côté d'une image intermédiaire et un groupe arrière sur un côté de l'objectif (2), et le groupe de lentilles du groupe avant de la lentille de formation d'image (5) a au moins une lentille négative, et dans lequel les conditions suivantes sont en outre satisfaites :

$$0,4 \leq D2/FTL \leq 1$$

$$0,7 \leq FTL1/FTL \leq 1,5$$

où FTL est une longueur focale de la lentille de formation d'image (5), FTL1 est une longueur focale du groupe arrière de la lentille de formation d'image (5), et D2 est un intervalle entre le groupe avant et le groupe arrière de la lentille de formation d'image (5).

2. Microscope à fluorescence de type à balayage laser selon la revendication 1, comprenant un moyen de transmission optique (18) qui conduit la lumière d'excitation de la section de source de lumière laser (1) jusqu'au moyen de balayage (3).

3. Microscope à fluorescence de type à balayage laser selon la revendication 1 ou 2, dans lequel la lentille de projection à pupille (6) comprend deux groupes de lentilles ou plus, une surface concave d'une lentille sur le côté le plus proche du moyen de balayage (3) est dirigée vers le côté du moyen de balayage (3), une surface concave d'une lentille sur le côté le plus proche du côté de l'image intermédiaire est dirigée vers le côté de l'image intermédiaire, et la condition suivante est satisfaite :

$$0,2 \leq Fe/D3 \leq 0,5$$

où D3 est une distance de la position conjuguée de la pupille de l'objectif située à proximité du moyen de balayage jusqu'à la position d'image intermédiaire de la lentille de formation d'image, et Fe est une longueur focale de la lentille de projection à pupille.

4. Microscope à fluorescence de type à balayage laser selon l'une quelconque des revendications 1 à 3, qui comprend deux groupes de lentilles ou plus, et comprend au moins une lentille cimentée ayant une lentille positive et une lentille négative, et les conditions suivantes sont satisfaites :

$$0,4 \leq FTL/D1 \leq 1$$

$$80 \leq \nu p$$

où $\nu p$ est le nombre d'Abbe de la lentille positive dans la lentille cimentée, et D1 est une distance de la position d'un épaulement de lentille jusqu'à la position d'image intermédiaire.

5. Microscope à fluorescence de type à balayage laser selon la revendication 1, comprenant une première fibre multimode qui conduit la lumière d'excitation de la section de source de lumière laser (1) jusqu'au moyen de balayage (3), une deuxième fibre multimode qui conduit une fluorescence d'un échantillon (10) jusqu'au système optique de détection (7), une première lentille par laquelle une entrée de la lumière d'excitation dans la première fibre multimode est effectuée, et une deuxième lentille par laquelle une entrée de la fluorescence dans la deuxième fibre multimode est effectuée, et les conditions suivantes sont satisfaites :

$$2 \leq \phi em/\phi ex \leq 12$$

$$0{,}61 \times (\lambda ex/NAex) < \phi ex$$

$$0{,}61 \times (\lambda em/NAem) < \phi em$$

où $\phi ex$ est un diamètre d'un coeur de la première fibre multimode, $\phi em$ est un diamètre d'un coeur de la deuxième fibre multimode, NAex est la taille d'une ouverture par laquelle une entrée dans la première fibre multimode par la première lentille est effectuée, $\lambda ex$ est la longueur d'onde d'excitation, NAem est la taille d'une ouverture par laquelle une entrée dans la deuxième fibre multimode par la deuxième lentille est effectuée, et $\lambda em$ est la longueur d'onde de fluorescence.

6. Microscope à fluorescence de type à balayage laser selon la revendication 1 ou 2, comprenant un moyen de transmission optique (18, 21) qui conduit une fluorescence d'un échantillon (10) qui a été transmise par la lentille de projection à pupille (6) jusqu'au système optique de détection (7).

7. Microscope à fluorescence de type à balayage laser selon l'une quelconque des revendications 1 à 4, comprenant un moyen de transmission optique (18, 21) par lequel une fluorescence de l'échantillon (10) est conduite jusqu'au système optique de détection (7), tandis qu'une lumière d'excitation provenant de la section de source de lumière laser (1) est conduite jusqu'au moyen de balayage (3).

8. Microscope à fluorescence de type à balayage laser selon l'une quelconque des revendications 1 à 5, comprenant un premier moyen de transmission optique (18) qui conduit une lumière d'excitation provenant de la section de source de lumière laser (1) jusqu'au moyen de balayage (3), et un deuxième moyen de transmission optique (21) qui conduit une fluorescence de l'échantillon (10) jusqu'au système optique de détection (7).

9. Microscope à fluorescence de type à balayage laser selon l'une quelconque des revendications 1 à 6, dans lequel l'objectif (2) est un objectif de type immergé.

10. Microscope à fluorescence de type à balayage laser selon l'une quelconque des revendications 1 à 4, dans lequel la source de lumière laser (1) consiste en un laser semi-conducteur.

11. Microscope à fluorescence de type à balayage laser selon l'une quelconque des revendications 1 à 4, dans lequel le détecteur (7) est constitué sur la partie de corps principale d'un microscope.

12. Microscope à fluorescence de type à balayage laser selon la revendication 1, comprenant une première fibre multimode qui conduit la lumière d'excitation de la section de source de lumière laser (1) jusqu'au moyen de balayage (3), une deuxième fibre multimode qui conduit une fluorescence d'un échantillon (10) jusqu'au système optique de détection (7), une première lentille par laquelle une entrée de la lumière d'excitation dans la première fibre multimode est effectuée et une deuxième lentille dans laquelle une entrée de la fluorescence de la deuxième fibre multimode est effectuée, dans lequel toutes les conditions suivantes sont satisfaites :

$$4 \leq \phi em/\phi ex \leq 10$$

$$0{,}61 \times (\lambda ex/NAex) < \phi ex$$

$$0{,}61 \times (\lambda em/NAem) < \phi em$$

où $\phi ex$ est un diamètre d'un coeur de la première fibre multimode, $\phi em$ est un diamètre d'un coeur de la deuxième fibre multimode, NAex est la taille d'une ouverture par laquelle une entrée dans la première fibre multimode par la première lentille est effectuée, $\lambda ex$ est la longueur d'onde d'excitation, NAem est la taille d'une ouverture par laquelle une entrée dans la deuxième fibre multimode par la deuxième lentille est effectuée, et $\lambda$em est la longueur d'onde de fluorescence.

FIG.1

# FIG.2

DETECTION SIGNAL CONTROL

ANALYSIS DISPLAY

OPERATION PART CONTROL

SEMI-FOCUSSING x-y MOVEMENT CONTROL

LASER LIGHT SOURCE CONTROL

WAVELENGTH SELECTION · SEPARATION ELEMENT CONTROL

# FIG.3

INTERMEDIATE IMAGE POSITION

E (OBJECTIVE LENS PUPIL CONJUGATE POSITION)

AN OBJECTIVE LENS SHOULDER ON A BODY

BACKSIDE FOCAL POSITION

# FIG. 4

INTERMEDIATE IMAGE POSITION

AN OBJECTIVE LENS
SHOULDER ON A BODY

OBJECTIVE LENS
PUPIL CONJUGATE POSITION (E)

# FIG.5

# FIG.6

# FIG.7

# FIG.8

## FIG.9

# FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6429968 B1

- US 5608564 A